(19) Europäisches Patentamt
European Patent Office
Office européen des brevets

(11) EP 4 721 968 A1

# (12) EUROPEAN PATENT APPLICATION

published in accordance with Art. 153(4) EPC

(43) Date of publication:
**08.04.2026 Bulletin 2026/15**

(21) Application number: **24815396.7**

(22) Date of filing: **24.05.2024**

(51) International Patent Classification (IPC):
***B32B 7/022*** (2019.01) ***B32B 7/028*** (2019.01)
***B32B 17/10*** (2006.01) ***B32B 27/00*** (2006.01)
***B60K 35/23*** (2024.01) ***C09J 7/35*** (2018.01)
***C09J 201/00*** (2006.01) ***G02B 1/14*** (2015.01)
***G02B 1/18*** (2015.01) ***G02B 5/08*** (2006.01)
***G02B 5/30*** (2006.01) ***G02B 27/01*** (2006.01)
***G06F 3/147*** (2006.01)

(52) Cooperative Patent Classification (CPC):
**B32B 7/022; B32B 7/028; B32B 17/10; B32B 27/00; B60K 35/23; C09J 7/35; C09J 201/00; G02B 1/14; G02B 1/18; G02B 5/08; G02B 5/30; G02B 27/01; G06F 3/147**

(86) International application number:
**PCT/JP2024/019165**

(87) International publication number:
**WO 2024/247913 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.05.2023 JP 2023087112**
**24.10.2023 JP 2023182635**

(71) Applicant: **FUJIFILM Corporation**
**Tokyo 106-8620 (JP)**

(72) Inventors:
- **UEKI Keigo**
  **Minamiashigara-shi, Kanagawa 250-0193 (JP)**
- **WATANABE Shinya**
  **Minamiashigara-shi, Kanagawa 250-0193 (JP)**
- **ARITA Shusuke**
  **Minamiashigara-shi, Kanagawa 250-0193 (JP)**
- **TAKAYAMA Teru**
  **Minamiashigara-shi, Kanagawa 250-0193 (JP)**
- **ANZAI Akihiro**
  **Minamiashigara-shi, Kanagawa 250-0193 (JP)**

(74) Representative: **HGF**
**HGF Limited**
**4th Floor, 1 City Square**
**Leeds LS1 2ES (GB)**

## (54) LAMINATE, BONDED ARTICLE, IMAGE DISPLAY SYSTEM, AND METHOD FOR PRODUCING BONDED ARTICLE

(57) An object of the present invention is to provide a laminate which can be bonded to an adherend having a curved surface with favorable curved surface followability while suppressing occurrence of wrinkles after bonding, a bonded body and an image display system using the laminate, and a method for manufacturing a bonded body. The laminate of the present invention includes a hard coat layer disposed on the outermost side, a resin base material, and a heat seal layer in this order, and has a flexural stiffness coefficient S represented by an expression "Flexural stiffness coefficient S = Average tensile modulus of laminate (GPa) × (Thickness of laminate (μm))$^3$" of 5 × $10^6$ GPa·μm$^3$ or more, and an average thermal contraction rate at 140°C of 0.3% or more.

FIG. 1

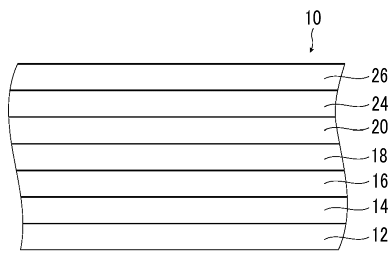




Processed by Luminess, 75001 PARIS (FR)

## Description

## BACKGROUND OF THE INVENTION

1. Field of the Invention

The present invention relates to a laminate including a hard coat layer, a resin base material, and a heat seal layer, a bonded body obtained by bonding the laminate to an adherend, an image display system using the laminate, and a method for manufacturing a bonded body obtained by bonding the laminate to an adherend.

2. Description of the Related Art

Recently, it is known as a so-called head-up display or head-up display system for providing various pieces of information such as maps, traveling speed, and vehicle conditions to a driver or the like by projecting screen images on a windshield glass of a vehicle or other moving objects.

With the head-up display system, drivers or other subjects observe virtual images of screen images which are projected on the windshield glass and include the above-described various pieces of information. A virtual image formation position is positioned on the driver's field of the vehicle outer side of the windshield glass.

The virtual image formation position is usually positioned at the driver's field more than 1,000 mm away from the windshield glass, and the outer side of the windshield glass. As a result, the driver can obtain the various information without moving the line of sight greatly while viewing the outside environment in front of the vehicle, and thus it is expected that the driver can drive more safely while obtaining the various information in a case where the head-up display system is used.

The head-up display system is configured, for example, by attaching a reflection film having light transmittance such as a half mirror film to the windshield glass to form a projection image display unit. Various films are proposed as the reflection film.

For example, WO2021/009394A proposes an optical film which can be used in a head-up display system as a display medium, the optical film including an optical functional layer and a block layer, in which the block layer has a cured substance of a resin composition containing a thermoplastic resin and an ultraviolet curable resin.

In the optical film, examples of the optical functional layer include a half-wave plate, a quarter-wave plate, a laminate of a half-wave plate and a circular polarization reflective layer, and a laminate of a quarter-wave plate and a circular polarization reflective layer. In addition, examples of the circular polarization reflective layer include a light reflecting layer using a cholesteric liquid crystal.

## SUMMARY OF THE INVENTION

As shown in WO2021/009394A, the reflection film used in the head-up display system is used, for example, by being bonded to glass such as the windshield glass.

The windshield glass usually has a curved surface. As a method of bonding a sheet-like material such as the reflection film to the adherend having such a curved surface, a method conceptually shown in FIG. 6 by thermal compression bonding using a heat seal layer is known.

In the method, first, as shown in the upper part of FIG. 6, a laminate 100 such as a reflection film on which a heat seal layer (not shown) is laminated is disposed between an adherend 102 having a curved surface, such as a windshield glass, and a mold 104 having a surface corresponding to the curved surface of the adherend 102, and is accommodated in a bag 106 such as a rubber bag as shown in the second part of FIG. 6.

Next, the laminate 100 is heated while reducing the pressure in the bag 106 to form a sandwiched body in which the laminate 100 is sandwiched between the adherend 102 and the mold 104, and thus the laminate 100 (heat seal layer) is vacuum heat-bonded to the adherend 102.

After the compression bonding using the bag is completed, the sandwiched body is taken out from the bag, and the sandwiched body is heated and pressed using an autoclave as shown in the third part of FIG. 6, and the laminate 100 is further heat-bonded to the adherend 102.

After the heating and pressing using the autoclave is completed, as shown in the lower part of FIG. 6, the laminate is taken out from the autoclave, and finally the mold 104 is removed from the laminate to obtain a bonded body in which the laminate 100 is bonded to the adherend 102.

According to the method for manufacturing the bonded body, the laminate such as the reflection film having the heat seal layer can be bonded along the curved surface of the adherend such as a glass plate having a curved surface with suppression of occurrence of wrinkles or the like.

On the other hand, the method for manufacturing the bonded body requires a mold having a surface corresponding to the curved surface of the adherend. Furthermore, after the bonding is completed, there is a need to perform a work of removing the mold from the sandwiched body in which the laminate is sandwiched between the adherend and the mold, and there is a problem that the work takes time.

Therefore, it is desired to bond the laminate having a heat seal layer to the adherend having a curved surface without using the mold.

However, according to the studies of the present inventors, in a case where the laminate having a heat seal layer in the related art is bonded to the adherend having a curved surface without using the mold, there are many cases in which an inconvenience occurs such as wrinkles occurring in the bonded laminate and insufficient followability with respect to the curved surface of the adherend.

An object of the present invention is to solve such a problem of the related art, and to provide a laminate which is easily followed by a curved surface of an adherend in a case of being bonded to the adherend having a curved surface, and in which occurrence of wrinkles after the bonding can be further suppressed, a bonded body using the laminate, an image display system using the laminate, and a method for manufacturing a bonded body obtained by bonding the laminate to the adherend.

In order to achieve the above-described object, the present invention has the following configurations.

[1] A laminate including, in the following order:

a hard coat layer;
a resin base material; and
a heat seal layer,
in which the heat seal layer is disposed on an outermost side of the laminate,
a flexural stiffness coefficient S represented by the following expression 1 is $5 \times 10^6$ [GPa·$\mu$m$^3$] or more, and
an average thermal contraction rate at 140°C is 0.3% or more,
the expression 1 the flexural stiffness coefficient S =
an average tensile modulus of the laminate [GPa] $\times$ (a thickness of the laminate [$\mu$m])$^3$.

[2] The laminate according to [1],
in which a storage elastic modulus of the heat seal layer at 90°C is 300 MPa or less.
[3] The laminate according to [1] or [2],
in which a storage elastic modulus of the heat seal layer at 25°C is 50 MPa or more.
[4] The laminate according to any one of [1] to [3], further comprising:
a reflective layer.
[5] The laminate according to any one of [1] to [4], further comprising:
a retardation layer.
[6] The laminate according to any one of [1] to [5], further comprising:
a polarization conversion layer.
[7] The laminate according to any one of [1] to [6],
in which the hard coat layer, the resin base material, a retardation layer, a reflective layer, a polarization conversion layer, and the heat seal layer are provided in this order.
[8] The laminate according to [7],
in which a storage elastic modulus of the heat seal layer at 90°C is 150 MPa or less and a storage elastic modulus of the heat seal layer at 25°C is 100 MPa or more.
[9] The laminate according to any one of [1] to [7], further comprising:
a protective film on a side of the hard coat layer opposite to a side of the resin base material.
[10] The laminate according to [8], further comprising:
a protective film on a side of the hard coat layer opposite to a side of the resin base material.
[11] A bonded body comprising:

a glass having a curved surface; and
the laminate according to any one of [1] to [10], which is bonded to the glass.

[12] A bonded body comprising:

a windshield glass; and
the laminate according to any one of [1] to [10], which is bonded to the windshield glass.

[13] An image display system comprising:

the laminate according to any one of [1] to [10]; and
an image display apparatus which projects an image onto the laminate.

[14] A method for manufacturing a bonded body, comprising:

a step 1 of obtaining a bonded body by accommodating, in a bag, an adherend having a curved surface shape and the laminate according to any one of [1] to [10] in a state in which the heat seal layer is on a side of the adherend, and then heating an inside of the bag under reduced pressure to conform the laminate along the curved surface shape, without using a mold having a surface corresponding to the curved surface shape of the adherend; and
a step 2 of heating and pressing the bonded body obtained in the step 1.

[15] The method for manufacturing a bonded body according to [14],
in which the heating under reduced pressure is performed with a sheet-like member sandwiched between the laminate and the bag.

According to the present invention, it is possible to provide a laminate which can be bonded to an adherend having a curved surface with favorable curved surface followability while suppressing occurrence of wrinkles after bonding.

## BRIEF DESCRIPTION OF THE DRAWINGS

FIG. 1 is a view conceptually showing an example of the laminate according to the embodiment of the present invention.
FIG. 2 is a conceptual view for describing the method for manufacturing a bonded body according to the embodiment of the present invention.
FIG. 3 is a conceptual view for describing the method for manufacturing a bonded body according to the embodiment of the present invention.
FIG. 4 is a view conceptually showing an example of the image display system according to the embodiment of the present invention.
FIG. 5 is a partially enlarged view of FIG. 4.
FIG. 6 is a conceptual view for describing the method for manufacturing a bonded body in the related art.

## DESCRIPTION OF THE PREFERRED EMBODIMENTS

Hereinafter, the laminate, the bonded body, the image display system, and the method for manufacturing a bonded body according to the embodiments of the present invention will be described in detail based on suitable examples shown in the accompanying drawings.
The drawings described below are conceptual drawings for explaining the present invention, and the present invention is not limited to the drawings illustrated below. Therefore, the sizes, shapes, and positional relationships of the respective members, the thicknesses of the respective layers in the laminate, the thickness relationship between the respective layers, and the like are different from the actual ones.
In addition, in the following description, "to" indicating the numerical range includes numerical values described on both sides. For example, in a case where $\varepsilon_1$ is a numerical value $\alpha_1$ to a numerical value $\beta_1$, the range of $\varepsilon_1$ is a range including the numerical value $\alpha_1$ and the numerical value $\beta_1$, and it is expressed as $\alpha_1 \leq \varepsilon_1 \leq \beta_1$ in mathematical symbols.
The laminate according to the embodiment of the present invention includes a hard coat layer, a resin base material, and a heat seal layer in this order, and the heat seal layer is located on the outermost side.
FIG. 1 conceptually shows an example of the laminate according to the embodiment of the present invention.
A laminate 10 in the example shown in the drawing includes a protective film 12, a hard coat layer 14, a resin base material 16, a retardation layer 18, a reflective layer 20, a polarization conversion layer 24, and a heat seal layer 26 from the lower side in the drawing.
It is noted that, in the present invention, the protective film 12, the retardation layer 18, the reflective layer 20, and the polarization conversion layer 24 in the laminate 10 in the example shown in the drawing are provided as preferred aspects, and are not essential configuration requirements. For example, the laminate according to the embodiment of the present invention may not include the protective film 12, or may not include one or more of the retardation layer 18, the reflective layer 20, and the polarization conversion layer 24.
That is, the laminate according to the embodiment of the present invention can use various layer structures as

long as it includes the hard coat layer 14, the resin base material 16, and the heat seal layer 26 in this order and the heat seal layer is located on the outermost side.

In addition, various layers such as a linear polarizer and a filter can be used in addition to the layers shown in the drawing.

Here, the laminate 10 according to the embodiment of the present invention has a flexural stiffness coefficient S represented by an expression 1: "Flexural stiffness coefficient S = Average tensile modulus of laminate [GPa] $\times$ (Thickness of laminate [$\mu$m])$^3$" of $5 \times 10^6$ GPa$\cdot\mu$m$^3$ or more, and an average thermal contraction rate at 140°C of 0.3% or more.

Due to such a configuration, the laminate 10 according to the embodiment of the present invention can easily follow a curved surface of an adherend when bonded to the adherend having a curved surface, and can further suppress occurrence of wrinkles after bonding.

As shown in FIG. 6 as an example, in a case where a laminate including a heat seal layer, such as a reflection film, is bonded to an adherend having a curved surface, such as windshield glass, the laminate (heat seal layer) is bonded to the adherend by performing vacuum heating pressurization using a bag such as a rubber bag and autoclave-based heating pressurization using a mold which sandwiches the laminate together with the adherend.

The method for manufacturing the bonded body can bond the laminate to the adherend without generating wrinkles or the like in the laminate and suitably following the curved surface of the adherend. On the other hand, the method for manufacturing the bonded body requires a mold corresponding to the curved surface of the adherend, and further, the operation of removing the mold after bonding the laminate to the adherend is required, which is time-consuming.

Therefore, it is desired to bond the laminate including a heat seal layer to the object to be bonded, having a curved surface, without using the mold.

However, the laminate (film) in the related art has low stiffness and is slippery. Therefore, in a case where the laminate is bonded to the adherend by performing the vacuum heating pressurization and autoclave-based heating pressurization without using the mold, wrinkles in the laminate which occur in a case of abutting on the adherend are locally large, and these wrinkles remain in the laminate even after the bonding.

On the other hand, the laminate according to the embodiment of the present invention has a flexural stiffness coefficient S of $5 \times 10^6$ [GPa$\cdot\mu$m$^3$] or more, and thus has favorable stiffness. Therefore, the laminate according to the embodiment of the present invention is pressed by the bag in a state of having wrinkles which are not locally large and are uniform and small in the entire body in a case of abutting on the adherend.

Furthermore, the laminate according to the embodiment of the present invention has an average thermal contraction rate at 140°C of 0.3% or more. Therefore, the wrinkles are eliminated due to thermal contraction in a case of performing the autoclave-based heating pressurization.

Therefore, the laminate according to the embodiment of the present invention can be bonded to the adherend having a curved surface with favorable followability with respect to the curved surface and with suppression of the occurrence of wrinkles after bonding, without using the mold.

This point will be described in more detail later with reference to FIGS. 2 and 3.

In the present invention, the flexural stiffness coefficient S is preferably $15 \times 10^6$ [GPa$\cdot\mu$m$^3$] or more, and more preferably $25 \times 10^6$ [GPa$\cdot\mu$m$^3$] or more.

In the present invention, the upper limit of the flexural stiffness coefficient S is not limited, but is preferably $3000 \times 10^6$ [GPa$\cdot\mu$m$^3$] or less, more preferably $300 \times 10^6$ [GPa$\cdot\mu$m$^3$] or less, and still more preferably $100 \times 10^6$ [GPa$\cdot\mu$m$^3$] or less. It is preferable that the flexural stiffness coefficient S is set to $3{,}000 \times 10^6$ [GPa$\cdot\mu$m$^3$] or less from the viewpoint that it is possible to prevent the laminate from being unnecessarily thick, and handleability in a case of forming the laminate into a roll shape is excellent.

In the present invention, from the viewpoint of improving the followability with respect to the curved surface of the adherend, the average thermal contraction rate at 140°C is preferably 0.4% or more, and more preferably 0.6% or more.

In the present invention, the upper limit of the average thermal contraction rate at 140°C is not limited, but is preferably 5.0% or less. It is preferable that the average thermal contraction rate at 140°C is set to 5.0% or less from the viewpoint that a change in dimension in a case of performing a heat resistance test of the laminate can be suppressed.

As will be described later, examples of a method of obtaining the laminate exhibiting the above-described average thermal contraction rate include a method using a resin base material having a large residual stress.

In the present invention, the average tensile modulus for calculating the flexural stiffness coefficient S and the average thermal contraction rate may be measured by a method described in Examples later.

Although a specific method will be described in Examples, in a case of measuring the average tensile modulus, first, a sample piece having a predetermined size along a length direction is cut out in each of directions obtained by rotating from one in-plane direction of the laminate by 45° clockwise. Next, the cut sample piece is installed in a tensile tester such that a chuck interval in the measurement direction is 100 mm, and stretched at a stretching speed of 300 mm/min under a condition of a measurement temperature of 25°C such that the chuck interval is widened, thereby obtaining a stress-strain curve. The tensile modulus is calculated by linear regression of the obtained curve. In a case

where the in-plane direction of the laminate corresponding to the length direction of the test piece exhibiting the maximum tensile modulus among the tensile moduli of the sample piece is defined as a first direction, and a direction orthogonal to the first direction is defined as a second direction, an average value of the tensile modulus in the first direction and the tensile modulus in the second direction is defined as the average tensile modulus of the laminate.

In addition, although a specific method will be described in Examples, in a case of measuring the average thermal contraction rate, first, a sample piece having a predetermined size along a length direction is cut out in each of directions obtained by rotating from one in-plane direction of the laminate by 45° clockwise. Next, two reference lines are drawn in advance in a width direction of the cut sample piece such that an interval is 100 mm. The sample piece is allowed to stand in a heating oven at 140°C under no tension for 45 minutes, and then cooled to room temperature, and the interval between the two reference lines is measured. A thermal contraction rate of the sample piece is measured from the interval before the treatment and the interval after the treatment. In a case where the in-plane direction of the laminate corresponding to the length direction of the test piece exhibiting the maximum thermal contraction rate among the thermal contraction rates of the sample piece is defined as a first direction, and a direction orthogonal to the first direction is defined as a second direction, an average value of the thermal contraction rate in the first direction and the thermal contraction rate in the second direction is defined as the average thermal contraction rate of the laminate.

The lower limit of the above-described average tensile modulus is not particularly limited, but is preferably 0.01 GPa or more, and more preferably 0.1 GPa or more. The upper limit of the above-described average tensile modulus is not particularly limited, but is preferably 10.0 GPa or less, and more preferably 8.0 GPa or less.

The lower limit of the thickness of the laminate is not particularly limited, but is preferably 100 μm or more, and more preferably 150 μm or more. The upper limit of the thickness of the laminate is not particularly limited, but is preferably 1,000 μm or less, and more preferably 400 μm or less.

The thickness of the laminate may be measured by a method described in Examples later.

As described above, the laminate 10 shown in FIG. 1 includes the protective film 12, the hard coat layer 14, the resin base material 16, the retardation layer 18, the reflective layer 20, the polarization conversion layer 24, and the heat seal layer 26 from the lower side in the drawing.

In the laminate 10 according to the embodiment of the present invention, the protective film 12 can be used from the viewpoint of suppressing transfer of unevenness of the bag in a case of being superheated and pressed in a bag such as a rubber bag, preventing blocking during winding, and stabilizing transport. As described above, the protective film 12 is not an essential configuration requirement in the laminate according to the embodiment of the present invention.

It is desirable that the protective film 12 is applied onto a surface of the hard coat layer 14 as shown in FIG. 1. More specifically, the protective film 12 is disposed on a side of the hard coat layer 14 opposite to the resin base material 16. The protective film 12 may be provided on the hard coat layer 14 after the hard coat layer 14 is formed and before the curved surface is formed, or may be laminated on the hard coat layer 14 during the formation of the curved surface.

The protective film 12 may be peeled off, for example, in a stage in which it is no longer necessary in a case of windshield processing.

Examples of a material for the protective film 12 include resins such as a polyethylene-based resin, a polypropylene-based resin, a polystyrene-based resin, and a polyethylene terephthalate-based resin; nitrile-based rubbers such as an acrylonitrile-butadiene-based rubber; butyl rubber; acrylic rubber; thermoplastic elastomers such as a thermoplastic polyolefin elastomer (TPO), a thermoplastic polyurethane elastomer (TPU), a thermoplastic polyester elastomer (TPEE), a thermoplastic polyamide elastomer (TPAE), and a diene-based elastomer (1,2-polybutadiene); and elastomers such as a silicone-based elastomer and a fluorine-based elastomer. A film formed by one or two or more of these materials in a single layer or a multilayer can be used as the protective film 12.

A thickness of the protective film 12 is not particularly limited as long as the laminate satisfies the above-described flexural elastic coefficient, but is preferably 20 μm or more, more preferably 100 μm or more, and still more preferably 200 μm or more. The upper limit value thereof is not particularly limited, but is often 5,000 μm or less.

A tensile modulus of the protective film 12 is not particularly limited as long as the laminate satisfies the above-described flexural elastic coefficient, but is preferably 0.001 GPa or more, more preferably 0.01 GPa or more, still more preferably 0.1 GPa or more, and particularly preferably 1.0 GPa or more.

The upper limit value thereof is not particularly limited, but is often 12.0 GPa or less.

The tensile modulus of the protective film 12 can be changed, for example, depending on the material constituting the protective film 12, and in general, the tensile modulus tends to be increased by increasing a molecular weight and/or a degree of crystallinity of the resin or the elastomer. In addition, the tensile modulus in the stretching direction of the protective film 12 can be increased by stretching. Even in a case where the protective film 12 consists of a plurality of layers, the tensile modulus means a tensile modulus as the protective film.

It is desirable that the protective film 12 contracts due to heat.

In general, the manufacturing of the protective film 12 also includes a process of stretching, and stress due to the stretching remains as residual stress. Therefore, the residual stress can be utilized to induce thermal contraction during the curved surface following through heating.

A temperature at which the protective film 12 thermally contracts varies depending on the material for the protective film 12, but is preferably in a range of 80°C to 200°C, and more preferably in a range of 90°C to 140°C which is a heating treatment temperature in a general curved surface following process.

The heating for contraction the protective film 12 may be performed on the entire curved glass, or may be performed locally on portions where the curvature is high and insufficient following likely to occur.

A thermal contraction rate of the protective film 12 is not particularly limited as long as the laminate satisfies the above-described thermal contraction rate, but an average of thermal contraction rates in two directions, that is, in a direction in which the thermal contraction rate is maximized and a direction orthogonal to the direction, at 140°C is preferably 0.3% to 10.0% and more preferably 0.3% to 5.0%. The thermal contraction rate can be appropriately adjusted depending on the stretching conditions in a case of manufacturing the protective film 12.

The protective film 12 may have a pressure-sensitive adhesive layer on at least one surface, and may be a self-adhesive pressure-sensitive adhesive protective film having pressure-sensitive adhesive properties.

The laminate 10 according to the embodiment of the present invention includes a hard coat layer (HC layer) 14.

The HC layer 14 provides abrasion resistance which is less likely to be scratched even in a case of being rubbed against hard materials, scratch resistance which prevents damage even in a case of being pressed by hard materials, antifouling property which allows easy removal of dirt even in a case where the dirt adheres to the layer, and the like.

It is preferable that the HC layer 14 is obtained by polymerizing and curing at least one compound selected from the group consisting of a polysiloxane-containing compound having a polymerizable group in the molecule and a fluorine-containing compound having a polymerizable group in the molecule, and a polymerizable compound having a polymerizable group in the molecule, other than these compounds, which will be described later; and it is more preferable that the polymerizable groups are radically polymerizable groups. As a result, in the HC layer 14, the compound selected from the group consisting of the polysiloxane-containing compound and the fluorine-containing compound and the polymerizable compound forming the HC layer 14 are present in a bonded state, thereby imparting more excellent antifouling property. In a case where the compound selected from the group consisting of the polysiloxane-containing compound and the fluorine-containing compound has a polymerizable group, the polymerizable group in the compound selected from the group consisting of the polysiloxane-containing compound and the fluorine-containing compound, which will be described later, reacts to form a bond and is present in the HC layer 14 in a bonded state.

In a case where the HC layer 14 has a laminated structure of two or more layers as will be described later, the compound selected from the group consisting of the polysiloxane-containing compound and the fluorine-containing compound is preferably contained in at least HC layer farthest from the resin base material 16, and more preferably contained only in the HC layer farthest from the resin base material 16. In a case where at least one compound selected from the group consisting of a polysiloxane-containing compound having a polymerizable group in the molecule and a fluorine-containing compound having a polymerizable group in the molecule is used, it is preferable that at least the HC layer 14 farthest from the resin base material is a cured film of the compound, and it is more preferable that only the HC layer 14 farthest from the resin base material is a cured film of the compound.

Hereinafter, specific aspects of the HC layer 14 will be described, but the present invention is not limited to the following aspects.

The fluorine-containing compound is not particularly limited as long as it can impart the rub resistance or the antifouling property to the HC layer 14, and a compound having a fluorine atom in the molecule can be used. As the fluorine-containing compound, a fluorine-containing antifouling agent having properties of an antifouling agent is preferably used.

The fluorine-containing compound may be a monomer, an oligomer, or a polymer. The fluorine-containing compound preferably has a substituent which contributes to formation of a bond with other components (for example, the polysiloxane-containing compound, a polymerizable monomer which is a constituent component of the resin, and a resin) or compatibility with the other components in the HC layer 14. These substituents may be the same or different from each other, and it is preferable that the compound have a plurality of substituents.

The substituent is preferably a polymerizable group, and may be a polymerizable reactive group exhibiting any of radical polymerization properties, polycondensation properties, cationic polymerization properties, anionic polymerization properties, or addition polymerization properties. Preferred examples of the substituent include an acryloyl group, a methacryloyl group, a vinyl group, an allyl group, a cinnamoyl group, an epoxy group, an oxetanyl group, a hydroxyl group, a polyoxyalkylene group, a carboxyl group, and an amino group. Among these, a radically polymerizable group is preferable, and an acryloyl group or a methacryloyl group is more preferable.

The fluorine-containing compound may be a polymer or an oligomer with a compound not containing a fluorine atom.

The polysiloxane-containing compound in the present invention is not particularly limited, and examples thereof include compounds having a polysiloxane structure in the molecule.

The polysiloxane structure included in the polysiloxane-containing compound may be linear, branched, or cyclic.

As the polysiloxane-containing compound, a polysiloxane antifouling agent having properties of the antifouling agent is preferably used.

A content of the polysiloxane-containing compound in the curable composition for forming the HC layer is preferably 0.01% to 5% by mass, more preferably 0.1% to 5% by mass, still more preferably 0.5% to 5% by mass, and particularly preferably 0.5% to 2% by mass with respect to the total solid content in the curable composition for forming the HC layer.

In a case where the HC layer 14 has a laminated structure of two or more layers as will be described later, the addition amount means an amount of the polysiloxane-containing compound contained in the curable composition for forming the HC layer 14.

The HC layer 14 can be obtained by irradiating a curable composition for forming the HC layer with active energy rays to cure the composition. In the present specification, the "active energy rays" refers to ionizing radiation, and includes X-rays, ultraviolet rays, visible rays, infrared rays, electron beams, $\alpha$-rays, $\beta$-rays, $\gamma$-rays, and the like.

The curable composition for forming the HC layer 14, used for forming the HC layer, contains at least one component having a property of being cured by irradiation with the active energy rays (hereinafter, also referred to as "active energy ray-curable component"). The active energy ray-curable component is preferably at least one polymerizable compound selected from a radically polymerizable compound and a cationically polymerizable compound. In the present specification, the "polymerizable compound" is a compound having a polymerizable group in a molecule, and it is sufficient that the number of polymerizable groups is 1 or more in one molecule. The polymerizable group is a group which can participate in a polymerization reaction, and specific examples thereof include groups included in various polymerizable compounds, which will be described later. In addition, examples of the polymerization reaction include various polymerization reactions such as radical polymerization, cationic polymerization, and anionic polymerization.

In addition, it is preferable that the HC layer 14 is obtained by irradiating the curable composition for forming the HC layer, which contains at least one compound selected from the group consisting of a fluorine-containing compound having a polymerizable group in the molecule and a polysiloxane-containing compound having a polymerizable group in the molecule, and contains a polymerizable compound having a polymerizable group in a molecule, other than these compounds, with the active energy rays to polymerize and cure the curable composition. In this case, the polymerizable groups included in the polysiloxane-containing compound, the fluorine-containing compound, and the polymerizable compound are more preferably radically polymerizable groups.

The HC layer 14 may have a single-layer structure or a laminated structure of two or more layers, and an HC layer having a single-layer structure or an HC layer having a laminated structure of two or more layers, which will be described in detail below, is preferable.

Examples of a preferred aspect of the curable composition for forming the HC layer having a single-layer structure include, as a first aspect, a curable composition for forming an HC layer, containing at least one polymerizable compound having two or more ethylenically unsaturated groups in one molecule. The ethylenically unsaturated group refers to a functional group containing an ethylenically unsaturated double bond. In addition, examples thereof also include, as a second aspect, a curable composition for forming an HC layer, containing at least one radically polymerizable compound and at least one cationically polymerizable compound.

The curable composition for forming the HC layer preferably contains a polymerization initiator, and more preferably contains a photopolymerization initiator. The curable composition for forming the HC layer, which contains the radically polymerizable compound, preferably contains a radical photopolymerization initiator; and the curable composition for forming the HC layer, which contains the cationically polymerizable compound, preferably contains a cationic photopolymerization initiator. For the radical photopolymerization initiator, one kind may be used alone, or two or more kinds with different structures may be used in combination. The same also applies to the cationic photopolymerization initiator.

Hereinafter, each of the photopolymerization initiators will be described in order.

The radical photopolymerization initiator may be any photopolymerization initiator as long as it can generate a radical as an active species by light irradiation; and known radical photopolymerization initiators can be used without any limitation.

The radical photopolymerization initiator and auxiliary agent can be synthesized by known methods, and are available as commercially available products. Preferred examples of commercially available radical photopolymerization initiators include IRGACURE (127, 651, 184, 819, 907, 1870 (CGI-403/Irg 184 = 7/3 mixing initiator), 500, 369, 1173, 2959, 4265, 4263, and OXE 01), and the like manufactured by BASF; KAYACURE (DETX-S, BP-100, BDMK, CTX, BMS, 2-EAQ, ABQ, CPTX, EPD, ITX, QTX, BTC, MCA, and the like) manufactured by Nippon Kayaku Co., Ltd.; and Esacure (KIP100F, KB1, EB3, BP, X33, KT046, KT37, KIP150, and TZT) manufactured by Sartomer Arkema Inc.

A content of the radical photopolymerization initiator in the curable composition for forming the HC layer described above may be appropriately adjusted within a range in which the polymerization reaction (radical polymerization) of the radically polymerizable compound favorably proceeds, and the content is not particularly limited. The content is preferably 0.1 to 20 parts by mass, more preferably 0.5 to 10 parts by mass, and still more preferably 1 to 10 parts by mass with respect to 100 parts by mass of the radically polymerizable compound contained in the curable composition for forming the HC layer described above.

The cationic photopolymerization initiator may be any photopolymerization initiator as long as it can generate a cation as an active species by light irradiation; and known cationic photopolymerization initiators can be used without any limitation.

As the cationic photopolymerization initiator, from the viewpoint of sensitivity of the photopolymerization initiator with respect to light, stability of the compound, and the like, a diazonium salt, an iodonium salt, a sulfonium salt, or an iminium salt is preferable. In addition, from the viewpoint of weather fastness, an iodonium salt is preferable.

Specific examples of commercially available products of the iodonium salt-based cationic photopolymerization initiator include B2380 manufactured by TOKYO CHEMICAL INDUSTRY CO., LTD.; BBI-102 manufactured by Midori Kagaku Co., Ltd.; WPI-113, WPI-124, WPI-169, and WPI-170 manufactured by Wako Pure Chemical Industries, Ltd.; and DTBPI-PFBS manufactured by Toyo Gosei Co., Ltd.

In addition, specific examples of iodonium salt compounds which can be used as the cationic photopolymerization initiator include the following compounds PAG-1 and PAG-2.

Cationic photopolymerization initiator (iodonium salt compound) PAG-1

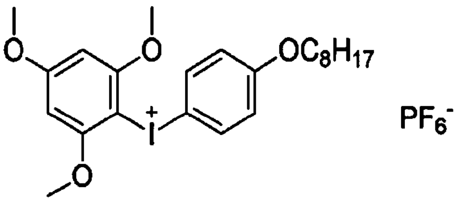

Cationic photopolymerization initiator (iodonium salt compound) PAG-2

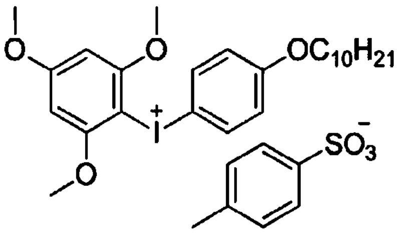

A content of the cationic photopolymerization initiator in the curable composition for forming the HC layer described above may be appropriately adjusted within a range in which the polymerization reaction (cationic polymerization) of the cationically polymerizable compound favorably proceeds, and the content is not particularly limited. The content is preferably 0.1 to 200 parts by mass, more preferably 1 to 150 parts by mass, and still more preferably 2 to 100 parts by mass with respect to 100 parts by mass of the cationically polymerizable compound.

Examples of other photopolymerization initiators include photopolymerization initiators described in paragraphs 0052 to 0055 of JP2009-204725A, the contents of which are incorporated into the present invention.

-Component which can be optionally contained in curable composition for forming HC layer-

The curable composition for forming the HC layer contains at least one component having a property of being cured by irradiation with active energy rays and a compound selected from the group consisting of a polysiloxane-containing compound and a fluorine-containing compound; and can optionally contain at least one polymerization initiator, preferably contains the at least one polymerization initiator. The details thereof are as described above.

The curable composition for forming the HC layer also preferably contains a solvent.

As the solvent, an organic solvent is preferable, and one kind or two or more kinds can be mixed and used at an arbitrary ratio. Specific examples of the organic solvent include alcohols such as methanol, ethanol, propanol, n-butanol, and i-butanol; ketones such as acetone, methyl isobutyl ketone, methyl ethyl ketone, and cyclohexanone; cellosolves such as ethyl cellosolve; aromatic solvents such as toluene and xylene; glycol ethers such as propylene glycol monomethyl ether; acetic acid esters such as methyl acetate, ethyl acetate, and butyl acetate; and diacetone alcohol.

Among these, it is preferable to use a mixture of cyclohexanone, methyl ethyl ketone, methyl isobutyl ketone,

butyl acetate, isopropyl acetate, and methyl acetate at an arbitrary ratio.

An amount of the solvent in the curable composition for forming the HC layer can be appropriately adjusted within a range that ensures coating suitability of the composition. The content of the solvent is preferably 50 to 500 parts by mass and more preferably 80 to 200 parts by mass with respect to 100 parts by mass of the total amount of the polymerizable compound and the photopolymerization initiator.

In addition, a proportion of solid contents of the curable composition for forming HC is preferably 10% to 90% by mass, more preferably 50% to 80% by mass, and still more preferably 65% to 75% by mass with respect to the total mass of the curable composition for forming HC.

The curable composition for forming the HC layer may contain one or more known additives in an arbitrary amount, in addition to the above-described components. Examples of the additive include a surface modifier, a polymerization inhibitor, and polyrotaxane.

The details thereof can refer to, for example, paragraphs 0032 to 0034 of JP2012-229412A. However, the additive is not limited thereto, and various additives which can be generally added to the curable composition for forming the HC layer can be used.

The curable composition for forming the HC layer can be prepared by simultaneously or sequentially mixing the various components described above in any order. The preparation method is not particularly limited, and the composition can be prepared using a known stirrer or the like.

A thickness of the HC layer 14 is preferably 1 μm or more, more preferably 1 to 100 μm, still more preferably 1 to 20 μm, particularly preferably 3 to 20 μm, and most preferably 5 to 20 μm.

The thickness of the HC layer 14 is measured by cutting the HC layer 14 with a microtome to take out a cross section, staining the cross section with a 3% by mass aqueous solution of osmium tetroxide for one night, and then taking out the surface again to observe the cross section with a scanning electron microscope (SEM).

The HC layer can be formed by applying the curable composition for forming the HC layer and irradiating the curable composition with active energy rays.

The coating can be performed by a known coating method such as a dip coating method, an air knife coating method, a curtain coating method, a roller coating method, a die coating method, a wire bar coating method, and a gravure coating method.

The HC layer can also be formed as an HC layer of a laminated structure having two or more layers (for example, approximately 2 to 5 layers) by applying two or more compositions with different formulations simultaneously or sequentially.

The HC layer can be formed by irradiating the applied curable composition for forming the HC layer with active energy rays.

For example, in a case where the curable composition for forming the HC layer contains the radically polymerizable compound, the cationically polymerizable compound, the radical photopolymerization initiator, and the cationic photopolymerization initiator, each of a polymerization reaction of the radically polymerizable compound and a polymerization reaction of the cationically polymerizable compound can be initiated and proceed by the action of the radical photopolymerization initiator and the cationic photopolymerization initiator, respectively. A wavelength of the light to be radiated may be determined depending on the type of the polymerizable compound and polymerization initiator to be used. Examples of a light source for the light irradiation include a low pressure mercury lamp, a high pressure mercury lamp, an ultra-high pressure mercury lamp, a carbon arc lamp, a metal halide lamp, a xenon lamp, a chemical lamp, an electrodeless discharge lamp, and a light emitting diode (LED), all of which emit light in a wavelength range of 150 to 450 nm.

In addition, the amount of light irradiation is preferably 30 to 3,000 $mJ/cm^2$ and more preferably 100 to 1,500 $mJ/cm^2$. A drying treatment may be performed as necessary before or after the light irradiation, or before and after the light irradiation. The drying treatment can be performed by blowing hot air, disposing the film in a heating furnace, transporting the film in a heating furnace, and the like.

In a case where the curable composition for forming the HC layer contains a solvent, the heating temperature may be set to a temperature at which the solvent can be dried and removed, and is not particularly limited. The heating temperature means the temperature of hot air or the internal atmospheric temperature of the heating furnace.

The laminate 10 includes a resin base material 16.

A material for the resin base material 16 is not particularly limited as long as the laminate 10 satisfies the above-described specification of the flexural elastic coefficient and the thermal contraction rate. The resin base material 16 is preferably transparent in a visible light region.

A material for the resin base material 16 is not particularly limited. Examples of the resin base material 16 include polyesters such as polyethylene terephthalate (PET), and plastic films such as polycarbonate, an acrylic resin, an epoxy resin, polyurethane, polyamide, polyimide, polyolefin, a cellulose derivative, and silicone.

As the resin base material 16, a cellulose acylate film is preferable.

A thickness of the resin base material 16 is not particularly limited as long as the laminate satisfies the above-described flexural elastic coefficient, but is preferably 10 μm or more, more preferably 25 μm or more, and still more preferably 40 μm or more. The upper limit value thereof is not particularly limited, but is often 500 μm or less.

A tensile modulus of the resin base material 16 is not particularly limited as long as the laminate satisfies the above-described flexural elastic coefficient, but is preferably 1.0 GPa or more, more preferably 2.5 GPa or more, still more preferably 3.0 GPa or more, particularly preferably 3.5 GPa or more, and most preferably 4.0 GPa or more. The upper limit value thereof is not particularly limited, but is often 12.0 GPa or less.

The tensile modulus of the resin base material 16 can be changed, for example, depending on the type of the resin constituting the resin base material 16, and generally tends to be increased by increasing a molecular weight and/or a degree of crystallinity of the resin. In addition, the tensile modulus of the resin base material 16 in the stretching direction can be increased by stretching. Even in a case where the resin base material 16 consists of a plurality of layers, the tensile modulus means a tensile modulus as the resin base material 16.

The resin base material 16 may be formed by any method, and examples thereof include a melt film-forming method and a solution film-forming method.

(Melt film-forming method and smoothing)

In a case where the resin base material 16 is formed by a melt film-forming method, the melt film-forming method preferably includes a melting step of melting a resin with an extruder, a step of extruding the melted resin into a sheet shape from a die, and a step of molding the melted resin into a film shape. Depending on a material of the resin, a step of filtering the melted resin may be provided after the melting step, or the melted resin may be cooled in a case where the melted resin is extruded into a sheet shape.

Hereinafter, the melt film-forming method will be specifically described, but the present invention is not limited thereto.

The method for manufacturing the resin base material described above preferably includes a melting step of melting a resin with an extruder; a filtration step of filtering the melted resin through a filtering device equipped with a filter; a film-forming step of extruding the filtered resin into a sheet shape from a die, cooling and solidifying the extruded resin by closely attaching the resin to a cooling drum, thereby forming an unstretched resin base material; and a stretching step of uniaxially or biaxially stretching the unstretched resin base material.

With such a configuration, the resin base material can be manufactured. In a case where a pore diameter of the filter used in the filtration step of filtering the melted resin is 1 μm or less, foreign substances can be sufficiently removed. As a result, a surface roughness of the obtained resin base material in a film width direction can be controlled.

Specifically, the method for forming the resin base material can include the following steps.

[Melting step]

The method for manufacturing the resin base material described above includes a melting step of melting a resin with an extruder.

It is preferable that the resin or a mixture of the resin and an additive is dried to a moisture content of 200 ppm or less, and then introduced into a uniaxial (monoaxial) or biaxial extruder to be melted. In this case, in order to suppress decomposition of the resin, it is also preferable to melt the resin in nitrogen or in a vacuum. The step can be performed under detailed conditions with the aid of paragraphs 0051 and 0052 of JP4962661B (paragraphs 0085 and 0086 of US2013/0100378A) in accordance with these publications, and the contents of these publications are incorporated in the present specification.

The extruder is preferably a uniaxial kneading extruder.

Furthermore, it is also preferable to use a gear pump in order to improve accuracy of sending the melted resin (melting).

[Filtration step]

The method for manufacturing the resin base material described above includes a filtration step of filtering the melted resin through a filtering device equipped with a filter, in which a pore diameter of the filter used in the filtration step is preferably 1 μm or less.

In the filtration step, only one set of the filtering device having the filter having such a pore diameter range may be installed, or two or more sets thereof may be installed.

[Film-forming step]

The method for manufacturing the resin base material described above includes a film-forming step of extruding

the filtered resin into a sheet shape from a die, cooling and solidifying the extruded resin by closely attaching the resin to a cooling drum, thereby forming an unstretched resin base material.

In a case where the melted (and kneaded) and filtered resin (melting containing the resin) is extruded into a sheet shape from the die, it may be extruded in a single layer, or may be extruded in a multilayer. In a case of extrusion in a multilayer, for example, a layer containing an ultraviolet absorber and a layer not containing an ultraviolet absorber may be laminated, but from the viewpoint that it is possible to suppress deterioration of the polarizer due to ultraviolet rays and suppress bleed-out of the ultraviolet absorber, a three-layer structure in which the layer containing an ultraviolet absorber is an inner layer is preferable.

In a case where the resin base material is manufactured by extruding a multilayer resin base material, the preferred thickness of the inner layer of the resin base material to be obtained is 50% to 99%, more preferably 60% to 99%, and still more preferably 70% to 99% with respect to the total thickness of all layers. Such lamination can be performed using a feed block die, a multi-manifold die, or the like.

It is preferable that the resin (melting containing the resin) extruded into a sheet shape from the die is extruded to a cooling drum (casting drum), and cooled and solidified, thereby an unstretched resin base material (original sheet), in accordance with paragraph 0059 of JP2009-269301A.

In the method for manufacturing the resin base material described above, the temperature of the resin extruded from the die is preferably 280°C to 320°C and more preferably 285°C to 310°C. In a case where the temperature of the resin extruded from the die in the melting step is 280°C or higher, it possible to reduce a residual melt of a raw material resin and suppress occurrence of foreign substances, which is preferable. In a case where the temperature of the resin extruded from the die in the melting step is 320°C or lower, it possible to reduce decomposition of the resin and suppress occurrence of foreign substances, which is preferable.

In measuring the temperature of the resin extruded from the die, a surface of the resin can be measured in a contactless manner using a radiation-type thermometer (manufactured by Hayashi Denko Co., Ltd., model number: RT61-2, used with an emissivity of 0.95).

In the method for manufacturing the resin base material described above, it is preferable to use an electrostatic applying electrode in a case of closely attaching the resin to the cooling drum in the film-forming step. As a result, the resin can be strongly and closely attached to the cooling drum, so that a film surface is not roughened.

In the method for manufacturing the resin base material described above, a temperature of the resin in a case where the resin is closely attached to the cooling drum (in a case where the melted resin extruded from the die first comes into contact with the cooling drum) is preferably 280°C or higher. As a result, electrical conductivity of the resin is increased, the resin can be strongly and closely attached to the cooling drum by electrostatic application, so that roughening of the film surface can be inhibited.

In measuring the temperature of the resin in a case of closely attaching the resin to the cooling drum, a surface of the resin can be measured in a contactless manner using a radiation-type thermometer (manufactured by Hayashi Denko Co., Ltd., model number: RT61-2, used with an emissivity of 0.95).

[Stretching step]

The method for manufacturing the resin base material described above includes a stretching step of uniaxially or biaxially stretching the unstretched resin base material.

In a machine-direction stretching step (a step of stretching the resin base material in the same direction as a transport direction of the film), after the resin base material is pre-heated, the resin base material in a heated state is stretched in the conveyance direction using a roller group of rollers having different circumferential speeds (that is, different transportation speeds).

A pre-heating temperature in the machine-direction stretching step is preferably (Tg - 40°C) or higher and (Tg + 60°C) or lower, more preferably (Tg - 20°C) or higher and (Tg + 40°C) or lower, and still more preferably Tg or higher and (Tg + 30°C) or lower with respect to a glass transition temperature (Tg) of the resin base material. In addition, the stretching temperature in the machine-direction stretching step is preferably Tg or higher and (Tg + 60°C) or lower, more preferably (Tg + 2°C) or higher and (Tg + 40°C) or lower, and still more preferably (Tg + 5°C) or higher and (Tg + 30°C) or lower. A stretching ratio in the machine direction is preferably 1.0 to 2.5 times and more preferably 1.1 to 2 times.

In addition to or in place of the machine-direction stretching step, the resin base material is subjected to cross-direction stretching in a width direction by a cross-direction stretching step (a step of stretching the resin base material in a direction perpendicular to the transport direction of the film). In the cross-direction stretching step, for example, a tenter can be preferably used, and using this tenter, both end portions of the resin base material in the width direction are gripped by clips and stretched in a cross direction. By the cross-direction stretching, the tensile modulus of the resin base material can be increased.

The cross-direction stretching is preferably performed using a tenter, and a stretching temperature is preferably Tg or higher and (Tg + 60°C) or lower, more preferably (Tg + 2°C) or higher and (Tg + 40°C) or lower, and still more

preferably (Tg + 4°C) or higher and (Tg + 30°C) or lower with respect to a glass transition temperature (Tg) of the resin base material. A stretching ratio is preferably 1.0 to 5.0 times and more preferably 1.1 to 4.0 times. It is also preferable to relax the resin base material in any one or both of the machine direction and the cross direction, after the cross-direction stretching.

In addition, a variation in thickness depending on the location in a width direction and a longitudinal direction is preferably 10% or less, more preferably 8% or less, still more preferably 6% or less, particularly preferably 4% or less, and most preferably 2% or less.

Here, the variation in thickness can be obtained as follows.

A stretched resin base material is sampled for 10 m (meter), both end portions in a width direction of the film are removed by 20%, and 50 points are sampled at equal intervals from the central part of the film in each of a width direction and a longitudinal direction to measure a thickness.

A thickness average value $Th_{TD\text{-}av}$, the maximum value $Th_{TD\text{-}max}$, and the minimum value $Th_{TD\text{-}min}$ in the width direction are obtained, and

$$(Th_{TD\text{-}max} - Th_{TD\text{-}min})/Th_{TD\text{-}av} \times 100\ [\%]$$

is the variation of the thickness in the width direction.

In addition, a thickness average value $Th_{MD\text{-}av}$, the maximum value $Th_{MD\text{-}max}$, and the minimum value $Th_{MD\text{-}min}$ in the longitudinal direction are obtained, and

$$(Th_{MD\text{-}max} - Th_{MD\text{-}min})/Th_{MD\text{-}av} \times 100\ [\%]$$

is the variation of the thickness in the longitudinal direction.

It is possible to improve accuracy of the thickness of the resin base material by the above-described stretching step.

The resin base material after the stretching can be wound into a roll shape in a winding step. In this case, a winding tension of the resin base material is preferably 0.02 kg/$mm^2$ or less.

Regarding other detailed conditions, contents described in paragraphs 0134 to 0148 of JP2015-224267A for the melt film formation and contents described in JP2007-137028A for the stretching step can be incorporated in the present specification in accordance with the present invention.

(Solution film-forming method and smoothing)

In a case where the resin base material is formed by a solution film-forming method, the solution film-forming method preferably includes a step of casting a dope solution on a casting band to form a casting film, a step of drying the casting film, and a step of stretching the casting film. Specifically, it is preferable to form the transparent substrate by a method described in JP4889335B.

In the present invention, the following method is preferably adopted.

Examples thereof include a method described in JP1999-123732A (JP-H11-123732A), in which a drying speed for the casting film is set to 300 % by mass/min (= 5 % by mass/s) or less based on an amount of a solvent contained on a dry base to perform gentle drying. In addition, examples thereof further include a method described in JP2003-276037A, in which in a co-casting method of a casting film having a multilayer structure having skin layers (outer layers) on both surfaces of a core layer which is an interlayer, a viscosity of a dope solution forming the outer layer is decreased while ensuring strength of the casting film by increasing a viscosity of a dope forming the core layer. Preferred examples thereof include a method of rapidly drying a casting film to form a film on the surface of the casting film, and smoothing a surface state by a leveling effect of the formed film, and a method of stretching a casting film.

It is desirable that the resin base material 16 contracts due to heat. In a case where the laminate follows the curved glass, since an extra portion is generated in the planar laminate with respect to the curved glass, it is estimated that the laminate does not easily follow the curved shape. Therefore, it is preferable that the resin base material 16 contracts due to heat, so that the extra portion of the laminate contracts to follow the curved shape.

In general, the manufacturing of the resin base material includes a process of stretching, and stress due to the stretching remains as residual stress. Therefore, the residual stress can be utilized to induce thermal contraction during the curved surface following through heating. It is estimated that the curved glass can be followed by the thermal contraction. In addition, the portion where the following is insufficient is likely to occur in the vicinity of the outer peripheral portion of the curved glass, where the curvature of the glass is large, and is unlikely to occur in portions of the glass, where the curvature is small. On the other hand, in the laminate using the resin base material which contracts due to heat, there is an effect of effectively suppressing the occurrence of wrinkles in the portions of the glass, where the curvature is small. In a portion of the glass with a large curvature, the laminate has a degree of freedom to expand in the thickness direction, causing the

laminate to contract in the plane direction. Conversely, in a portion of the glass with a small curvature, the degree of freedom to expand in the thickness direction is limited, and the laminate hardly contracts in the plane direction.

A temperature at which the resin base material 16 thermally contracts varies depending on a forming material of the resin base material 16, but is preferably in a range of 80°C to 200°C, and more preferably in a range of 90°C to 140°C, which is a heating treatment temperature in a general curved surface following process.

The heating for contraction the resin base material 16 may be performed on the entire curved glass, or may be performed locally on portions where the curvature is high and the insufficient following likely to occur.

The amount of contraction of the resin base material 16 required to suppress the insufficient following varies depending on the curvature, dimensions, and the like of the glass. A thermal contraction rate of the resin base material 16 is not particularly limited as long as the above-described thermal contraction rate is satisfied in a case of being laminated, but an average of thermal contraction rates in a direction in which the thermal contraction rate is maximized and a direction orthogonal to the direction at 140°C is preferably 0.3% to 5.0%, more preferably 0.3% to 3.0%, and still more preferably 0.3% to 2.0%. The thermal contraction rate can be appropriately adjusted depending on the stretching conditions in a case of manufacturing the resin base material.

The laminate 10 includes a retardation layer 18. As described above, the retardation layer 18 is not an essential configuration requirement in the laminate according to the embodiment of the present invention.

In the retardation layer 18, a phase difference (optical path difference) is provided to two orthogonal polarized light components to change the state of the incident polarized light.

In a case where the retardation layer 18 is disposed on a glass plate side on the in-vehicle side and optically compensates, a front phase difference of the retardation layer may be a phase difference which can optically compensate.

In this case, the retardation layer 18 preferably has a front retardation of 50 to 160 nm at a wavelength of 550 nm.

In addition, in a case where a windshield glass including the laminate is mounted in the vehicle, and a direction corresponding to an upper vertical direction of a surface of a glass plate is 0°, an angle of the slow axis is preferably 10° to 50° or -50° to -10°.

In addition, in a case where the retardation layer 18 converts linearly polarized light into circularly polarized light, the retardation layer 18 is preferably configured to provide $\lambda/4$ as the front phase difference, and may be configured to provide $3\lambda/4$ as the front phase difference. In addition, the angle of the slow axis may be set to change the incident linearly polarized light into circularly polarized light.

In this case, for example, the front phase difference of the retardation layer 18 at a wavelength of 550 nm is preferably in a range of 100 to 450 nm, and more preferably in a range of 120 to 200 nm or 300 to 400 nm. In addition, in a case where the laminate is used in a head-up display system, the direction of the slow axis of the retardation layer 18 is preferably determined in accordance with an incident direction of a projection light for displaying the projection image and a helical sense of the cholesteric liquid crystal layer constituting the reflective layer.

The retardation layer 18 is not particularly limited, and can be appropriately selected according to the purpose. Examples of the retardation layer 18 include a stretched polycarbonate film, a stretched norbornene-based polymer film, a transparent film in which inorganic particles having birefringence such as strontium carbonate are included and aligned, a thin film in which oblique deposition of an inorganic dielectric is performed on a support, a film in which the polymerizable liquid crystal compound is uniaxially aligned and the alignment is immobilized, and a film in which the liquid crystal compound is uniaxially aligned and the alignment is immobilized.

Among these, suitable examples of the retardation layer 18 include a film obtained by uniaxially aligning and immobilizing a polymerizable liquid crystal compound.

As an example, the retardation layer 18 can be formed by a method in which a liquid crystal composition containing a polymerizable liquid crystal compound is applied onto a resin base material, a temporary support, or a surface of an alignment layer, the polymerizable liquid crystal compound in the liquid crystal composition is formed in a nematic alignment in a liquid crystal state, and the polymerizable liquid crystal compound is immobilized by curing.

The retardation layer 18 may be a layer formed by applying a composition containing a high-molecular-weight liquid crystal compound onto the resin base material, the temporary support, the surface of the alignment layer, or the like, forming the nematic alignment in a liquid crystal state, cooling the composition, and immobilizing the alignment.

A thickness of the retardation layer 18 is not particularly limited, and is preferably 0.2 to 300 μm, more preferably 0.5 to 150 μm, and still more preferably 1.0 to 80 μm. A thickness of the retardation layer 18 formed from the liquid crystal composition is not particularly limited, and is preferably 0.2 to 10 μm, more preferably 0.5 to 5.0 μm, and still more preferably 0.7 to 2.0 μm.

The laminate 10 includes a reflective layer 20. As described above, the reflective layer 20 is not an essential configuration requirement in the laminate according to the embodiment of the present invention.

The reflective layer 20 reflects a part or all of visible light, and is not particularly limited. Examples thereof include a layer containing a metal, a layer in which a dielectric is laminated, and a layer containing a liquid crystal.

It is preferable that the reflective layer 20 includes a cholesteric liquid crystal layer having a selective reflection center wavelength in a red wavelength range, a cholesteric liquid crystal layer having a selective reflection center

wavelength in a green wavelength range, and a cholesteric liquid crystal layer having a selective reflection center wavelength in a blue wavelength range. The three cholesteric liquid crystal layers have different selective reflection center wavelengths. Each cholesteric liquid crystal layer may be in direct contact with any other cholesteric liquid crystal layer.

As is well known, the cholesteric liquid crystal layer is a layer composed of a liquid crystal compound in an alignment state of a helical structure in which a cholesteric liquid crystalline phase is immobilized, reflects light having a selective reflection center wavelength corresponding to a pitch of the helical structure, and transmits light in another wavelength range. In addition, the cholesteric liquid crystal layer exhibits selectively reflecting properties with respect to levorotatory or dextrorotatory circular polarization at a specific wavelength.

Here, from the viewpoint of visibility, it is preferable that the reflective layer 20 satisfies the following requirements (i) to (iii).

(i) in a wavelength range of 400 nm or more and less than 500 nm, the maximum value of the natural light reflectivity is more than 7% (preferably more than 20%), a difference between the greatest maximum value and the smallest minimum value of the natural light reflectivity is 3% or more, and the total value of wavelength bandwidths of the region higher than the average value of the maximum value and the minimum value of the natural light reflectivity is 20 to 80 nm.

(ii) in a wavelength range of 500 nm or more and less than 600 nm, the maximum value of the natural light reflectivity is more than 7% (preferably more than 20%), a difference between the greatest maximum value and the smallest minimum value of the natural light reflectivity is 3% or more, and the total value of wavelength bandwidths of the region higher than the average value of the maximum value and the minimum value of the natural light reflectivity is 20 to 80 nm.

(iii) in a wavelength range of 600 to 800 nm, the maximum value of the natural light reflectivity is more than 7% (preferably 20% or more), and the total value of wavelength bandwidths of the region higher than the average value of the maximum value and the minimum value of the natural light reflectivity is 120 nm or more.

In the reflective layer including the cholesteric liquid crystal layer, the reflected wavelength and the reflectivity can be adjusted by the selective reflection center wavelength and the thickness (helical pitch number) of the cholesteric liquid crystal layer. Mainly, the requirement (i) can be satisfied by the cholesteric liquid crystal layer reflecting light in the blue wavelength range, the requirement (ii) can be satisfied by the cholesteric liquid crystal layer reflecting light in the green wavelength range, and the requirement (iii) can be satisfied by the cholesteric liquid crystal layer reflecting light in the red wavelength range.

From the viewpoint that the transmittance can be increased while improving the reflection tint, the maximum value of the natural light reflectivity in the range of 400 nm or more and less than 500 nm is preferably more than 7%, and more preferably 20% or more. The upper limit thereof is not particularly limited, and may be, for example, 35% or less.

Similarly, from the viewpoint that the transmittance can be increased while improving the reflection tint, the maximum value of the natural light reflectivity in the range of 500 nm or more and less than 600 nm is preferably more than 7%, and more preferably 20% or more. The upper limit thereof is not particularly limited, and may be, for example, 35% or less.

From the viewpoint that the brightness of the display image can be increased while improving the reflection tint, the maximum value of the natural light reflectivity in the range of 600 to 800 nm is preferably more than 7%, and more preferably 20% or more. The upper limit thereof is not particularly limited, and may be, for example, 35% or less.

From the viewpoint that the transmittance can be increased while improving the reflection tint, the difference between the greatest maximum value and the smallest minimum value of the natural light reflectivity in the range of 400 nm or more and less than 500 nm is preferably 4% to 20%, and more preferably 4% to 12%.

Similarly, from the viewpoint that the transmittance can be increased while improving the reflection tint, the difference between the greatest maximum value and the smallest minimum value of the natural light reflectivity in the range of 500 nm or more and less than 600 nm is preferably 4% to 20%, and more preferably 4% to 12%.

From the viewpoint that the transmittance can be increased while improving the reflection tint, the wavelength bandwidth of the region having a higher reflectivity than the average value of the maximum value and the minimum value of the reflectivity in the range of 400 nm or more and less than 500 nm is preferably 30 to 78 nm, and more preferably 35 to 75 nm.

Similarly, from the viewpoint that the transmittance can be increased while improving the reflection tint, the wavelength bandwidth of the region having a higher reflectivity than the average value of the maximum value and the minimum value of the reflectivity in the range of 500 nm or more and less than 600 nm is preferably 30 to 78 nm, and more preferably 35 to 75 nm.

In the wavelength bandwidth in the range of 400 nm or more and less than 500 nm, and the wavelength bandwidth in the range of 500 nm or more and less than 600 nm, it is advantageous for the transmittance as the width is narrower. However, the reflection tint may be deteriorated in a case where the wavelength bandwidth in the range of 400 nm or more

and less than 500 nm and/or the wavelength bandwidth in the range of 500 nm or more and less than 600 nm is too narrow because the wavelength bandwidth in the range of 600 to 800 nm is wide. From this reason, the wavelength bandwidth in the range of 400 nm or more and less than 500 nm and the wavelength bandwidth in the range of 500 nm or more and less than 600 nm are preferably within the above-described ranges.

In addition, the wavelength bandwidth in the range of 500 nm or more and less than 600 nm has a large influence on the transmittance.

From the viewpoint of improving the front brightness of the display image while improving the reflection tint, the wavelength bandwidth of the region having a higher reflectivity than the average value of the maximum value and the minimum value of the reflectivity in the range of 600 to 800 nm is preferably 120 to 200 nm.

It is preferable that the reflective layer 20 has two or more cholesteric liquid crystal layers with different selective reflection center wavelengths. In addition, it is preferable that each cholesteric liquid crystal layer is in direct contact with any other cholesteric liquid crystal layer.

In a case where the cholesteric liquid crystal layers are spaced from each other, a film thickness between the layers is thick, and it is difficult to obtain the effect of interference of light reflected by each cholesteric liquid crystal layer. On the other hand, by adopting a configuration in which the cholesteric liquid crystal layers are in contact with each other, the wavelength bandwidth can be narrowed because of the effect of interference of light reflected by each cholesteric liquid crystal layer, which is preferable. In particular, in a case where a film thickness of each cholesteric liquid crystal layer is thinner than a wavelength of light (visible light of 380 nm to 780 nm), the effect of interference is more remarkable, which is preferable.

In a case where the reflective layer 20 has two or more cholesteric liquid crystal layers, the cholesteric liquid crystal layers are not limited to a configuration in which the individual cholesteric liquid crystal layers are in direct contact with each other, and the cholesteric liquid crystal layers may be configured to be laminated through an adhesive layer or the like.

Here, each cholesteric liquid crystal layer may have at least one selective reflection center wavelength, but at least one cholesteric liquid crystal layer may have two or more selective reflection center wavelengths. A cholesteric liquid crystal layer having two or more selective reflection center wavelengths is obtained by adopting a helical structure in which a helical pitch changes in a thickness direction.

The total thickness of the reflective layer 20 is preferably 0.4 to 2.0 μm, more preferably 0.6 to 1.8 μm, and still more preferably 0.8 to 1.4 μm.

The laminate 10 includes a polarization conversion layer 24. As described above, the polarization conversion layer 24 is not an essential configuration requirement in the laminate according to the embodiment of the present invention.

The polarization conversion layer 24 is preferably a layer with a helical alignment structure of the liquid crystal compound, which is immobilized, and the number of pitches x of the helical alignment structure and a film thickness y (unit: μm) of the polarization conversion layer satisfy all of the following relational expressions (a) to (c).

$$0.1 \leq x \leq 1.0 \text{ ... Expression (a)}$$

$$0.5 \leq y \leq 3.0 \text{ ... Expression (b)}$$

$$3000 \leq (1560 \times y)/x \leq 50000 \text{ ... Expression (c)}$$

One pitch of the helical structure of the liquid crystal compound is one turn of a helix of the liquid crystal compound. That is, the number of pitches in a state in which a director (a major axis direction in a case of a rod-like liquid crystal) of the helically aligned liquid crystal compound is rotated by 360° is defined as 1.

In a case where the polarization conversion layer 24 has the helical structure of the liquid crystal compound, the polarization conversion layer exhibits optical rotation and birefringence with respect to visible light having a wavelength shorter than a reflection peak wavelength in the infrared region. Therefore, the polarized light in the visible region can be controlled. By setting the number of pitches x of the helical alignment structure of the polarization conversion layer 24 and the film thickness y of the polarization conversion layer within the above-described ranges, a function of optically compensating the visible light with the polarization conversion layer or a straight line incident on the laminate or a function of converting linearly polarized light (p-polarized light) into circularly polarized light can be provided.

The polarization conversion layer 24 exhibits optical rotation and birefringence with respect to visible light because the liquid crystal compound has the helical structure satisfying the relational expressions (a) to (c). In particular, by setting a pitch P of the helical structure of the polarization conversion layer 24 to have a length corresponding to a pitch P of the cholesteric liquid crystal layer in which the selective reflection center wavelength is within the long wavelength infrared region, it is possible to exhibit high optical rotation and birefringence with respect to visible light having a short

wavelength.

The relational expression (a) is "$0.1 \leq x \leq 1.0$".

In a case where the number of pitches x of the helical structure is 0.1 or more, sufficient optical rotation and birefringence are obtained, which is preferable.

In addition, in a case where the number of pitches x of the helical structure is 1.0 or less, the optical rotation and birefringence are sufficient, and desired elliptic polarization is easily obtained.

The relational expression (b) is "$0.5 \leq y \leq 3.0$".

In a case where the thickness y of the polarization conversion layer is 0.5 μm or more, sufficient optical rotation and birefringence are obtained.

In a case where the thickness y of the polarization conversion layer is 3.0 μm or less, the optical rotation and birefringence are sufficient, and desired circular polarization is easily obtained.

The relational expression (c) is "$3000 \leq (1560 \times y)/x \leq 50000$".

In a case where "$(1560 \times y)/x$" is 3,000 or more, desired polarization is easily obtained.

In a case where "$(1560 \times y)/x$" is 50,000 or less, desired polarization is easily obtained.

In the present invention, the number of pitches x of the helical structure of the polarization conversion layer 24 is more preferably 0.1 to 0.8, and the film thickness y is more preferably 0.6 to 2.6 μm. In addition, "$(1560 \times y)/x$" is more preferably 5,000 to 13,000.

That is, it is preferable that the polarization conversion layer 24 has a long pitch P of the helical structure and a small number of pitches x.

Specifically, in the polarization conversion layer 24, it is preferable that the helical pitch P is equal to the pitch P of the cholesteric liquid crystal layer in which the selective reflection center wavelength is within the long wavelength infrared region, and the number of pitches x is small. More specifically, in the polarization conversion layer 24, it is preferable that the helical pitch P is equal to the pitch P of the cholesteric liquid crystal layer in which the selective reflection center wavelength is within 3,000 to 10,000 nm, and the number of pitches x is small.

Since the selective reflection center wavelength corresponding to the pitch P in the polarization conversion layer 24 is much longer than that of visible light, the above-described optical rotation and birefringence with respect to visible light are more suitably exhibited.

Basically, the polarization conversion layer 24 can be formed in the same manner as a known cholesteric liquid crystal layer. However, during the formation of the polarization conversion layer 24, it is preferable to adjust the liquid crystal compound to be used, the chiral agent to be used, the amount of the chiral agent added, the film thickness, and the like, so that the number of pitches x and the film thickness y [μm] of the helical structure in the polarization conversion layer 24 satisfy all of the relational expressions (a) to (c).

The laminate 10 includes a heat seal layer 26.

The heat seal layer 26 is a layer for physically bonding the laminate and the adherend.

The heat seal layer 26 preferably contains a thermoplastic resin or an elastomer.

As the thermoplastic resin, a resin having favorable affinity and adhesiveness with the adherend (for example, the glass substrate) is preferable, and examples thereof include a 1,2-polybutadiene resin, an ethylene-vinyl acetate copolymer (abbreviated as "EVA"; typically containing 3% by mass or more of a vinyl acetate constitutional unit), polyolefin resins such as polyethylene, a polyvinyl chloride resin, a polystyrene resin, a vinyl ester resin (excluding EVA), a saturated polyester resin, a polyamide resin, a fluororesin (such as polyvinylidene fluoride), a polycarbonate resin, a polyacetal resin, a urethane resin, an epoxy resin, a (meth)acrylate resin (also known as (meth)acrylic resin, referring to a (meth) acrylic acid ester resin and the like), an unsaturated polyester resin, a silicone resin, and modified resins of these resins. Examples of the urethane resin include a urethane-modified polyester resin and a urethane resin.

As the thermoplastic resin, polyvinyl butyral or ethylene-vinyl acetate copolymer is preferable.

The polyvinyl butyral can be obtained by acetalizing polyvinyl alcohol with butyl aldehyde.

An acetalization degree of the polyvinyl butyral is not particularly limited, but is preferably 40% or more and more preferably 60% or more. The upper limit thereof is not particularly limited, but is preferably 85% or less and more preferably 75% or less.

The polyvinyl alcohol used in the synthesis of the polyvinyl butyral is usually obtained by saponifying polyvinyl acetate, and polyvinyl alcohol with a saponification degree of 80 to 99.8 mol% is generally used.

In addition, a degree of polymerization of the above-described polyvinyl alcohol is preferably 200 to 3,000.

Examples of the elastomer include a conjugated diene block (co)polymer, an acrylic-based block (co)polymer, a styrene-based block (co)polymer, a block copolymer of an aromatic vinyl compound and a conjugated diene, a hydrogenated product of a conjugated diene block (co)polymer, a hydrogenated product of a block copolymer of an aromatic vinyl compound and a conjugated diene, an ethylene-α-olefin-based copolymer, a polar group-modified olefin-based copolymer, an elastomer of a polar group-modified olefin-based copolymer and a metal ion and/or a metal compound, acrylonitrile-butadiene rubber such as nitrile-based rubber, butyl rubber, acrylic rubber, a thermoplastic polyolefin elastomer (TPO), a thermoplastic polyurethane elastomer (TPU), a thermoplastic polyester elastomer (TPEE), a

thermoplastic polyamide elastomer (TPAE), a diene-based elastomer (1,2-polybutadiene and the like), a silicone-based elastomer, and a fluorine-based elastomer.

The thermoplastic resin or the elastomer may be synthesized by a known method, or a commercially available product thereof may be used. Examples of commercially available elastomers include KURARITY LA1114, KURARITY LA2140, KURARITY LA2250, KURARITY LA2330, KURARITY LA4285, HYBRAR 5127, HYBRAR 7311F, SEPTON 2104, and SEPTON 2063 (manufactured by Kuraray Co., Ltd., trade names). As the elastomer, an acrylic-based block (co) polymer or a styrene-based block (co)polymer is preferable.

From the viewpoint of balance between solubility in a solvent and storage elastic modulus, a weight-average molecular weight of the thermoplastic resin or the elastomer is preferably 10,000 to 1,000,000 and more preferably 50,000 to 500,000.

The heat seal layer 26 may contain a plasticizer. In a case where the heat seal layer contains a plasticizer, a storage elastic modulus of the heat seal layer is changed, and sliding properties on the glass are improved or adhesiveness to the glass is improved.

The plasticizer is not particularly limited, and for example, a phosphoric acid ester, a carboxylic acid ester, a carbohydrate derivative, a barbituric acid derivative, a rosin ester resin, a rosin resin, a hydrogenated rosin ester resin, a petroleum resin, a hydrogenated petroleum resin, a terpene resin, a terpene phenolic resin, an aromatic-modified terpene resin, a hydrogenated terpene resin, an alkylphenol resin, or the like can be used; and these resins can be used alone or in combination of two or more kinds thereof.

Examples of the phosphoric acid ester include triphenyl phosphate (TPP) and tricresyl phosphate (TCP). As the carboxylic acid ester, a phthalic acid ester and a citric acid ester are representative. Examples of the phthalic acid ester include dimethyl phthalate (DMP), diethyl phthalate (DEP), dibutyl phthalate (DBP), dioctyl phthalate (DOP), diphenyl phthalate (DPP), and diethylhexyl phthalate (DEHP). Examples of the citric acid ester include triethyl O-acetylcitrate (OACTE) and tributyl O-acetylcitrate (OACTB). Examples of other carboxylic acid esters include butyl oleate, methyl acetyl ricinoleate, dibutyl sebacate, and various trimellitic acid esters. A phthalic acid ester-based plasticizer (DMP, DEP, DBP, DOP, DPP, or DEHP) is used.

Examples of the carboxylic acid ester include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, triethylene glycol bis(2-ethylbutyrate), triethylene glycol di(2-ethylhexanoate), triethylene glycol diheptanoate, tetraethylene glycol diheptanoate, dihexyl adipate, dioctyl adipate, hexylcyclohexyl adipate, diisononyl adipate, heptylnonyl adipate, and dibutyl sebacate.

As the carbohydrate derivative, a derivative of a monosaccharide or a carbohydrate having 2 to 10 monosaccharide units (hereinafter, also referred to as a carbohydrate derivative-based plasticizer) is preferable.

Examples of the above-described carbohydrate derivative-based plasticizer include maltose octaacetate, cellobiose octaacetate, sucrose octaacetate, sucrose acetate isobutyrate, xylose tetrapropionate, glucose pentapropionate, fructose pentapropionate, mannose pentapropionate, galactose pentapropionate, maltose octapropionate, cellobiose octapropionate, sucrose octapropionate, xylose tetrabenzoate, glucose pentabenzoate, fructose pentabenzoate, mannose pentabenzoate, galactose pentabenzoate, maltose octabenzoate, cellobiose octabenzoate, sucrose octabenzoate, xylitol pentabenzoate, and sorbitol hexabenzoate.

The above-described barbituric acid derivative can be synthesized, for example, by a method for synthesizing barbituric acid, which condenses a urea derivative with a malonic acid derivative. A barbituric acid having two substituents on the nitrogen atom can be obtained by heating N,N'-disubstituted urea and malonyl chloride or mixing and heating malonic acid and an activating agent such as acetic anhydride. As the synthesis method, for example, a method described in Journal of the American Chemical Society, Vol. 61, p. 1015 (1939), Journal of Medicinal Chemistry, Vol. 54, p. 2409 (2011), Tetrahedron Letters, Vol. 40, p. 8029 (1999), and a pamphlet of WO2007/150011A, or the like can be preferably used.

The plasticizer may be synthesized by a known method, or a commercially available product may be used. Examples of the commercially available plasticizer include SUPER ESTER A75, SUPER ESTER A115, and SUPER ESTER A125 (all manufactured by ARAKAWA CHEMICAL INDUSTRIES, LTD.; rosin ester resin); PINECRYSTAL KR-85, PINECRYSTAL KE-311, and PINECRYSTAL PE-590 (all manufactured by ARAKAWA CHEMICAL INDUSTRIES, LTD.; rosin resin); Petrotack 60, Petrotack 70, Petrotack 90, Petrotack 100, Petrotack 100V, and Petrotack 90HM (all manufactured by Tosoh Corporation; petroleum resin); YS POLYSTER T30, YS POLYSTER T80, YS POLYSTER T100, YS POLYSTER T115, YS POLYSTER T130, YS POLYSTER T145, and YS POLYSTER T160 (all manufactured by YASUHARA CHEMICAL CO., LTD.; terpene phenolic resin); and YS RESIN PX800, YS RESIN PX1000, YS RESIN PX1150, and YS RESIN PX1250 (all manufactured by YASUHARA CHEMICAL CO., LTD., terpene resin). Examples

thereof also include MORESCO WHITE P-40, MORESCO WHITE P-55, MORESCO WHITE P-60, MORESCO WHITE P-70, MORESCO WHITE P-80, MORESCO WHITE P-100, MORESCO WHITE P-120, MORESCO WHITE P-150, MORESCO WHITE P-200, MORESCO WHITE P-260, and MORESCO WHITE P-350P (all manufactured by MORESCO Corporation; paraffinic oil); Diana Process Oil NS-24, Diana Process Oil NS-100, Diana Process Oil NM-26, Diana Process Oil NM-68, Diana Process Oil NM-150, Diana Process Oil NM-280, Diana Process Oil NP-24, Diana Process Oil NU-80, and Diana Process Oil NF-90 (all manufactured by Idemitsu Kosan Co., Ltd.; naphthenic oil); and Diana Process Oil AC-12, Diana Process Oil AC-460, Diana Process Oil AE-24, Diana Process Oil AE-50, Diana Process Oil AE-200, Diana Process Oil AH-16, and Diana Process Oil AH-58 (all manufactured by Idemitsu Kosan Co., Ltd.; aromatic oil).

A content of the plasticizer is preferably 1% to 80% by mass and more preferably 5% to 70% by mass in the solid content of the heat seal layer, in consideration of a balance of storage elastic moduli of the heat seal layer at 25°C and 95°C.

The heat seal layer 26 is preferably formed of a composition containing a polymerizable compound (composition for forming a heat seal layer) for chemical bonding with the reflective layer or the polarization conversion layer. The polymerizable compound is preferably a compound capable of being chemically bonded to the polymerizable liquid crystal compound used for forming the reflective layer or the polarization conversion layer. For example, in a case where the polymerizable liquid crystal compound has an ethylenically unsaturated polymerizable group, it is preferable that the polymerizable compound also has an ethylenically unsaturated polymerizable group.

Examples of the ethylenically unsaturated polymerizable group-containing compound include the following compounds. However, the present invention is not limited to the following exemplary compounds.

Examples thereof include bifunctional (meth)acrylate compounds such as polyethylene glycol 200 di(meth)acrylate, polyethylene glycol 300 di(meth)acrylate, polyethylene glycol 400 di(meth)acrylate, polyethylene glycol 600 di(meth)acrylate, triethylene glycol di(meth)acrylate, epichlorohydrin-modified ethylene glycol di(meth)acrylate (as a commercially available product, for example, Denacol DA-811 manufactured by Nagase & Co., Ltd.), polypropylene glycol 200 di(meth)acrylate, polypropylene glycol 400 di(meth)acrylate, polypropylene glycol 700 di(meth)acrylate, ethylene oxide (EO)/propylene oxide (PO) block polyether di(meth)acrylate (as a commercially available product, for example, BLEMMER PET series manufactured by NOF CORPORATION), dipropylene glycol di(meth)acrylate, bisphenol A EO-added di(meth)acrylate (as a commercially available product, for example, M-210 manufactured by Toagosei Co., Ltd., NK ESTER A-BPE-20 manufactured by Shin-Nakamura Chemical Co., Ltd., and the like), hydrogenated bisphenol A EO-added di(meth)acrylate (NK ESTER A-HPE-4 manufactured by Shin-Nakamura Chemical Co., Ltd., and the like), bisphenol A PO-added di(meth)acrylate (as a commercially available product, for example, light acrylate BP-4PA manufactured by KYOEISHA CHEMICAL Co., Ltd.), bisphenol A epichlorohydrin-added di(meth)acrylate (as a commercially available product, for example, Evecryl 150 manufactured by Daicel UCB), bisphenol A EO/PO-added di(meth)acrylate (as a commercially available product, for example, BP-023-PE manufactured by Toho Chemical Industry Co., Ltd.), bisphenol F EO-added di(meth)acrylate (as a commercially available product, for example, Aronix M-208 manufactured by Toagosei Co., Ltd.), 1,6-hexanediol di(meth)acrylate and epichlorohydrin-modified products thereof, neopentyl glycol di(meth)acrylate, hydroxypivalic acid neopentyl glycol di(meth)acrylate, and caprolactone-modified products thereof, 1,4-butanediol di(meth)acrylate, 1,9-nonanediol di(meth)acrylate, trimethylolpropane di(meth)acrylate, tricyclodecane dimethanol di(meth)acrylate, pentaerythritol di(meth)acrylate monostearate, trimethylolpropane acrylic acid/-benzoic acid ester, and isocyanuric acid EO-modified di(meth)acrylate (as a commercially available product, for example, Aronix M-215 manufactured by Toagosei Co., Ltd.).

In addition, examples thereof also include trifunctional (meth)acrylate compounds such as trimethylolpropane tri(meth)acrylate (as a commercially available product, for example, TPMTA manufactured by Nippon Kayaku Co., Ltd.) and EO, PO or epichlorohydrin-modified products thereof, pentaerythritol tri(meth)acrylate, glycerol tri(meth)acrylate, and EO, PO or epichlorohydrin-modified products thereof, isocyanuric acid EO-modified tri(meth)acrylate (as a commercially available product, for example, Aronix M-315 manufactured by Toagosei Co., Ltd., and the like), tris(meth)acryloyloxyethyl phosphate, hydrogen phthalate-(2,2,2-tri-(meth)acryloyloxymethyl)ethyl, and glycerol tri(meth)acrylate and EO, PO or epichlorohydrin-modified products thereof; tetrafunctional (meth)acrylate compounds such as pentaerythritol tetra(meth)acrylate (as a commercially available product, for example, TPMTA manufactured by Shin-Nakamura Chemical Co., Ltd.) and EO, PO or epichlorohydrin-modified products thereof, and ditrimethylolpropane tetra(meth)acrylate; pentafunctional (meth)acrylate compounds such as dipentaerythritol penta(meth)acrylate and EO, PO, epichlorohydrin, fatty acid, or alkyl-modified products thereof; and hexafunctional (meth)acrylates such as dipentaerythritol hexa(meth)acrylate and EO, PO, epichlorohydrin, fatty acid, or alkyl-modified products thereof, and sorbitol hexa(meth)acrylate and EO, PO, epichlorohydrin, fatty acid, or alkyl-modified products thereof.

Two or more kinds of the ethylenically unsaturated polymerizable group-containing compounds may be used in combination. In this case, a mixture "DPHA" (manufactured by Nippon Kayaku Co., Ltd.) of dipentaerythritol pentaacrylate and dipentaerythritol hexaacrylate can be preferably used.

In addition, as the ethylenically unsaturated polymerizable group-containing compound, a polyester (meth)acrylate having a weight-average molecular weight of 200 or more and less than 1,000, or an epoxy (meth)acrylate is also preferable. Examples of a commercially available product thereof include, as polyester (meth)acrylate, BEAMSET 700

(hexafunctional), BEAMSET 710 (tetrafunctional), BEAMSET 720 (trifunctional), and the like of BEAMSET 700 series (trade name) manufactured by ARAKAWA CHEMICAL INDUSTRIES, LTD. In addition, examples of the epoxy (meth) acrylate include trade name SP series manufactured by Showa Highpolymer Co., Ltd., such as SP-1506, 500, SP-1507, and 480; VR series manufactured by Showa Highpolymer Co., Ltd., such as VR-77; and trade name EA-1010/ECA, EA-11020, EA-1025, EA-6310/ECA and the like manufactured by Shin-Nakamura Chemical Co., Ltd.

From the viewpoint of adhesiveness with the glass substrate, an I/O ratio (ratio of an inorganicity value (I value) and an organicity value (O value)) of the polymerizable compound (particularly, the ethylenically unsaturated polymerizable group-containing compound) is preferably 0.40 or more, more preferably 0.60 or more, and still more preferably 1.2 or more. The upper limit of the I/O ratio is not particularly limited, but from the viewpoint of compatibility with the thermoplastic resin, it is preferably less than 3.0.

The I/O ratio is calculated by a calculation method with an organic conceptual diagram. The organic conceptual diagram is proposed by Fujita et al. and is an effective method for predicting various physicochemical properties from the chemical structure of an organic compound (see Yoshio Koda, Organic Concept Map - Basic and Application -, San-kyo Publishing Co., Ltd. (1984)). Since the polarity of the organic compound is influenced by the number of carbon atoms and the substituent, the inorganicity value and the organicity value of the organic compound are determined based on setting an organicity value of a methylene group to 20 and an inorganicity value of a hydroxyl group to 100, and the inorganicity value and the organicity value of the organic compound are calculated. An organic compound with a high inorganicity value has high polarity, while an organic compound with a high organicity value has low polarity.

Specific calculation methods of the I value, O value, and I/O ratio described above are disclosed by Honma et al., who are co-authors of "New Edition of Organic Concept Diagram: Basics and Applications," as an organic concept diagram calculation sheet for Excel (http://www.ecosci.jp/sheet/orgs_help.html); and the I value, O value, and I/O ratio described above can be calculated using the disclosed calculation sheet.

In a case where the composition used for forming the heat seal layer 26 contains a polymerizable compound, a content of the polymerizable compound is preferably 5% to 80% by mass, more preferably 10% to 60% by mass, and still more preferably 15% to 50% by mass with respect to the solid content in the composition.

The solid content in the composition means components other than a solvent in the composition. Even in a case where a component is liquid, it is calculated as the solid content.

From the viewpoint of adhesion to glass, it is preferable that the composition used for forming the heat seal layer 26 (composition for forming heat seal layer) contains a polymerization initiator.

Examples of the polymerization initiator include a photopolymerization initiator.

The photopolymerization initiator may be any photopolymerization initiator as long as it can generate a radical as an active species by light irradiation; and known photopolymerization initiators can be used without any limitation. Specific examples thereof include acetophenones such as diethoxyacetophenone, 2-hydroxy-2-methyl-1-phenylpropan-1-one, benzyldimethylketal, 4-(2-hydroxyethoxy)phenyl-(2-hydroxy-2-propyl)ketone, 1-hydroxycyclohexylphenyl ketone, 2-methyl-2-morpholino(4-thiomethylphenyl)propan-1-one, 2-benzyl-2-dimethylamino-1-(4-morpholinophenyl)butanone, 2-hydroxy-2-methyl-1-[4-(1-methylvinyl)phenyl]propanone oligomer, and 2-hydroxy-1-{4-[4-(2-hydroxy-2-methyl-propionyl)-benzyl]phenyl}-2-methyl-propan-1-one; oxime esters such as 1,2-octanedione, 1-[4-(phenylthio)-,2-(O-benzoyloxime)], and ethanone,1-[9-ethyl-6-(2-methylbenzoyl)-9H-carbazol-3-yl]-,1-(0-acetyloxime); benzoins such as benzoin, benzoin methyl ether, benzoin ethyl ether, benzoin isopropyl ether, and benzoin isobutyl ether; benzophenones such as benzophenone, ortho-benzoyl methyl benzoate, 4-phenylbenzophenone, 4-benzoyl-4'-methyl-diphenyl sulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzenemethanaminium bromide, and (4-benzoylbenzyl)trimethylammonium chloride; thioxanthones such as 2-isopropylthioxanthone, 4-isopropylthioxanthone, 2,4-diethylthioxanthone, 2,4-dichlorothioxanthone, 1-chloro-4-propoxythioxanthone, and 2-(3-dimethylamino-2-hydroxy)-3,4-dimethyl-9H-thioxanthone-9-one mesochloride; and acylphosphine oxides such as 2,4,6-trimethylbenzoyl-diphenylphosphine oxide, bis(2,6-dimethoxybenzoyl)-2,4,4-trimethyl-pentylphosphine oxide, and bis(2,4,6-trimethylbenzoyl)-phenylphosphine oxide. In addition, as an auxiliary agent of the polymerization initiator, triethanolamine, triisopropanolamine, 4,4'-dimethylaminobenzophenone (Michler's ketone), 4,4'-diethylaminobenzophenone, 2-dimethylaminoethylbenzoic acid, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, 2,4-diethylthioxanthone, 2,4-diisopropylthioxanthone, and the like may be used in combination.

The above-described polymerization initiator and auxiliary agent can be synthesized by known methods, and are available as commercially available products. Examples of commercially available radical photopolymerization initiators include IRGACURE (127, 651, 184, 819, 907, 1870 (CGI-403/Irg 184 = 7/3 mixing initiator), 500, 369, 1173, 2959, 4265, 4263, and OXE 01), and the like manufactured by BASF; KAYACURE (DETX-S, BP-100, BDMK, CTX, BMS, 2-EAQ, ABQ, CPTX, EPD, ITX, QTX, BTC, MCA, and the like) manufactured by Nippon Kayaku Co., Ltd.; and Esacure (KIP100F, KB1, EB3, BP, X33, KT046, KT37, KIP150, and TZT) manufactured by Sartomer Arkema Inc.

A content of the polymerization initiator contained in the above-described composition used for forming the heat seal layer 26 may be appropriately adjusted within a range in which a polymerization reaction of the polymerizable

compound proceeds well, and is not particularly limited. In a case where the composition used for forming the heat seal layer contains a polymerization initiator, a content of the polymerization initiator is preferably 0.1 to 20 parts by mass, more preferably 0.5 to 10 parts by mass, and still more preferably 1 to 10 parts by mass with respect to 100 parts by mass of the polymerizable compound contained in the above-described composition.

The heat seal layer 26 may contain inorganic particles. In a case where the heat seal layer 26 contains inorganic particles, unevenness is formed on a surface of the heat seal layer 26, and in a case where the heat seal layer 26 and the HC layer 14 are rolled in a state in which the heat seal layer 26 and the HC layer 14 are in direct contact with each other, friction between the heat seal layer 26 and the HC layer 14 can be reduced, and this allows the heat seal layer 26 and the HC layer 14 to be rolled without wrinkles, which is preferable.

As the inorganic particles contained in the heat seal layer 26, inorganic oxide particles are preferable; and silica (silicon dioxide) particles, aluminum oxide particles, titanium dioxide particles, or zirconium oxide particles are more preferable; and silica particles are still more preferable.

It is preferable that the inorganic particles consist of primary particles, and form secondary particles obtained by aggregation of the primary particles.

An average primary particle diameter of the inorganic particles is not particularly limited, but is preferably 5 to 50 nm and more preferably 5 to 15 nm.

An average secondary particle diameter of the inorganic particles is not particularly limited, but is preferably 100 to 500 nm.

A content of the inorganic particles in the heat seal layer 26 is not particularly limited, but is preferably 1% by mass or more and more preferably 9% by mass or more with respect to the total mass of the heat seal layer 26. The upper limit thereof is not particularly limited, but is preferably 40% by mass or less and more preferably 30% by mass or less.

The average primary particle diameter of the inorganic particles is measured by transmission electron microscope observation. Specifically, for 50 primary particles optionally selected, a diameter of a circle circumscribed about each primary particle is obtained, and an arithmetic average of these diameters is defined as the average primary particle diameter. An observation magnification of the transmission electron microscope is set to any magnification at which a primary particle diameter in a range of 500,000 times to 5,000,000 times can be discriminated.

The above-described average secondary particle diameter is a value measured by fitting of a perfectly spherical shape (refractive index: 1.46) using a laser diffraction and scattering-type particle size distribution analyzer. As the analyzer, for example, MicroTrac MT3000 manufactured by MicroTrac Co., Ltd. can be used.

The heat seal layer 26 may contain a leveling agent.

As the leveling agent, a known leveling agent can be used, and examples thereof include surfactants, in which a fluorine-based surfactant or a silicone-based surfactant is preferable.

A fluorine content in the fluorine-based surfactant is preferably 3% to 40% by mass, more preferably 5% to 30% by mass, and still more preferably 7% to 25% by mass. The fluorine-based surfactant in which the fluorine content is within the above-described range is effective in terms of the evenness of the thickness of the coating film or liquid saving property.

A content of the leveling agent in the heat seal layer 26 is not particularly limited, but is preferably 0.005% to 0.5% by mass and more preferably 0.01% to 0.1% by mass with respect to the total mass of the heat seal layer 26.

The heat seal layer 26 is preferably formed by applying the composition for forming the heat seal layer.

The composition for forming the heat seal layer contains the above-described components, and is used for forming the heat seal layer 26.

From the viewpoint of coating properties, the composition for forming the heat seal layer preferably contains a solvent.

The type of the solvent is not particularly limited, and examples thereof include water and organic solvents, in which an organic solvent is preferable. Examples of the organic solvent include a ketone, an alkyl halide, an amide, a sulfoxide, a heterocyclic compound, a hydrocarbon, an ester, and an ether.

A method of applying the composition for forming the heat seal layer is not particularly limited, and examples thereof include a wire bar coating method, a curtain coating method, an extrusion coating method, a direct gravure coating method, a reverse gravure coating method, a die-coating method, a spin coating method, a dip coating method, a spray coating method, and a slide coating method.

A coating film obtained by the coating may be subjected to a drying treatment as necessary.

Examples of the drying treatment include a heating treatment. A heating temperature in the heating treatment is not particularly limited, but is preferably 50°C to 150°C and more preferably 60°C to 140°C. A heating time is not particularly limited, but is preferably 0.5 to 20 minutes and more preferably 0.5 to 10 minutes.

A surface treatment may be performed on the surface of the formed heat seal layer 26 (surface on a side opposite to the reflective layer or the polarization conversion layer) as necessary.

For example, in order to reduce the water contact angle of the surface of the heat seal layer 26, a hydrophilic treatment may be performed on the surface of the heat seal layer 26. Examples of the hydrophilic treatment include plasma treatment, ultraviolet irradiation treatment, corona treatment, and electron beam irradiation treatment, in which corona

treatment is preferable.

Conditions of the hydrophilic treatment are appropriately selected according to the type of treatment to be performed, and are preferably adjusted to be within the range of the water contact angle of the surface of the heat seal layer 26 described above.

From the viewpoint of adhesion with the glass substrate, the reflective layer, or the polarization conversion layer, an average thickness of the heat seal layer 26 is preferably 0.2 μm or more, more preferably 0.4 μm or more, and still more preferably 0.8 μm or more. The upper limit thereof is not particularly limited, but from the viewpoint of thinning, it is preferably 20 μm or less and more preferably 10 μm or less.

As a method for measuring the above-described average thickness, the heat seal layer 26 is cut with a microtome to take out a cross section, the cross section is observed with a scanning electron microscope (SEM), thicknesses at three different positions of the heat seal layer 26 are measured, and an average value (arithmetic average value) of the measured values is calculated to obtain the average thickness.

The heat seal layer 26 may have a monolayer structure or a multilayer structure of two or more layers.

In a case where the heat seal layer 26 has a multilayer structure, the average value of the total thickness of the heat seal layers 26 may be within the above-described range.

In the present invention, the storage elastic moduli of the heat seal layer at 25°C and 90°C are obtained as follows.

(Sample production method)

The heat seal layer is dissolved in a solvent or melted to obtain a coating liquid, and the obtained coating liquid is applied onto a release-treated surface of a release polyethylene terephthalate (PET) sheet such that a thickness after drying is 40 μm. Thereafter, the coating liquid is dried, and a test piece of the heat seal layer is obtained by peeling off the heat seal layer from the release PET sheet.

(Measuring method)

Using a dynamic viscoelasticity measuring device (DVA-225 manufactured by IT Measurement and Control Co., Ltd.), the storage elastic moduli at 25°C and 90°C are measured for the above-described test piece which has been humidified in advance for 2 hours or more in an atmosphere of a temperature of 25°C and a relative humidity of 60% under the following conditions.

Sample: 5 mm x 20 mm
Grip distance: 20 mm
Setting distortion: 0.10%
Measuring temperature: -40°C to 140°C
Temperature rising condition: 5 °C/min

From the viewpoint of sliding properties on the glass, the storage elastic modulus of the heat seal layer at 25°C is preferably 50 MPa or more, more preferably 100 MPa or more, and still more preferably 200 MPa or more. The upper limit of the storage elastic modulus of the heat seal layer at 25°C is not particularly limited, but is usually 6 GPa or less.

From the viewpoint of adhesiveness to glass during heating and pressing at 90°C, the storage elastic modulus of the heat seal layer at 90°C is preferably 300 MPa or less, more preferably 150 MPa or less, still more preferably 100 MPa or less, and even more preferably 50 MPa or less. The lower limit of the storage elastic modulus of the heat seal layer at 90°C is not particularly limited, but is usually 0.01 MPa or more.

The bonded body according to the embodiment of the present invention includes a glass having a curved surface and the laminate according to the embodiment of the present invention, which is bonded to the glass having a curved surface.

The glass having a curved surface is not limited, and various known glasses can be used. Examples thereof include a window glass having a curved surface, a glass having a curved surface, used for interior and exterior of a building, and a glass having a curved surface, used for a lens.

Another aspect of the bonded body according to the embodiment of the present invention includes a windshield glass and the laminate according to the embodiment of the present invention, which is bonded to the windshield glass.

The windshield glass is not limited, and various windshield glasses used in a vehicle such as an automobile, a ship, an aircraft, a train, a two-wheeled vehicle, and the like can be used.

Accordingly, the windshield glass may be one piece of glass or laminated glass in which a plurality of pieces of glass are laminated. In addition, the laminated glass may have an interlayer film such as polyvinyl butyral between the pieces of glass, or may not have the interlayer film.

The bonded body according to the embodiment of the present invention is preferably manufactured by a method

for manufacturing a bonded body according to the embodiment of the present invention, which will be described below.

FIGS. 2 and 3 conceptually show an example of the method for manufacturing a bonded body according to the embodiment of the present invention.

As an example, the following description is made with a case in which the laminate according to the embodiment of the present invention is bonded to the windshield glass. However, the present invention is not limited thereto, and various known adherend may be used as long as they have a curved surface.

Examples of the adherend other than the windshield glass include various glasses having a curved surface described above.

In the method for manufacturing a bonded body according to the embodiment of the present invention, first, as shown in the upper part of FIG. 2, a windshield glass 28 and the laminate 10 according to the embodiment of the present invention are laminated. In this case, the lamination is performed such that the heat seal layer 26 of the laminate 10 faces the windshield glass 28.

In the lamination, the laminate 10 follows a curved surface shape of the windshield glass 28, so that wrinkles are generated in the laminate 10 as shown in the upper part of FIG. 3.

Next, as shown in the second row of FIG. 2, the laminate is accommodated in a bag 106 such as a rubber bag in the same manner as in the example shown in FIG. 6.

Here, in the method for manufacturing a bonded body according to the embodiment of the present invention, the mold 104 used in the manufacturing method the related art shown in FIG. 6 is not used.

Furthermore, the same vacuum heating pressurization is performed as described above. That is, the laminate 10 is pressed by the bag 106 by heating while reducing the pressure in the bag 106, and as a result, the laminate 10 is heated and pressed against the windshield glass 28.

Here, the laminate 10 according to the embodiment of the present invention has a flexural stiffness coefficient S of $5 \times 10^6$ [GPa·μm$^3$] or more, and thus has sufficient stiffness. Therefore, the laminate 10 is not locally wrinkled by the pressing with the bag 106, and as shown in the middle part of FIG. 3, the laminate 10 is pressed with the bag 106 in a state in which small wrinkles are generated on the entire surface.

A film, a sheet (sheet-like member) such as rubber or cloth, or the like may be interposed between the laminate 10 and the bag 106 to perform the vacuum heating pressurization. By interposing the sheet to perform the vacuum heating pressurization, it is possible to suppress a press mark generated by dust mixed between the laminate 10 and the bag 106 being pressed against the laminate 10. In addition, in a case where the laminates 10 and the bag 106 have poor sliding properties, it is possible to reduce deaeration unevenness by interposing a sheet having favorable sliding properties on both the laminate 10 and the bag 106.

A material for the above-described film is not particularly limited, and examples thereof include an acrylic resin film, a polycarbonate (PC) resin film, a cellulose ester resin film such as a triacetyl cellulose (TAC) resin film, a polyethylene terephthalate (PET) resin film, a polyolefin resin film, a polyester resin film, and an acrylonitrile-butadiene-styrene copolymer film; and from the viewpoint of heat resistance, a polycarbonate resin film, a cellulose ester resin film, or a polyethylene terephthalate resin film is preferable.

From the viewpoint of improving the sliding properties, the above-described film may have unevenness on the surface. The unevenness on the surface can be imparted to the film by a known method such as adding a matting agent to the film or performing an embossing treatment.

From the viewpoint of reducing the adhesion of foreign substances during the vacuum heating pressurization, it is preferable that the above-described film is subjected to an antistatic treatment on the surface. The antistatic treatment can be performed by a known method such as adding an antistatic agent.

A material for the above-described rubber is not particularly limited, and examples thereof include butadiene rubber (BR), styrene-butadiene rubber (SBR), chloroprene rubber (CR), isoprene rubber (IR), acrylonitrile-butadiene rubber (NBR), ethylene-propylene-diene rubber (EPDM), butyl rubber (IIR), chloroprene rubber (CR), silicone rubber, and fluororubber; and from the viewpoint of heat resistance, EPDM rubber, silicone rubber, or fluororubber is preferable. These rubbers may be used alone or in combination of two or more thereof.

From the viewpoint of improving the sliding properties, the above-described rubber may have unevenness on the surface. The unevenness on the surface can be imparted to the rubber by a known method such as adding a matting agent to the rubber or performing an embossing treatment.

From the viewpoint of reducing the adhesion of foreign substances during the vacuum heating pressurization, it is preferable that the above-described rubber is subjected to an antistatic treatment on the surface. The antistatic treatment can be performed by a known method such as adding an antistatic agent.

The rubber may be formed into a film by a known method, or a commercially available product may be used. Examples of the commercially available rubber include EB240N, EB250N, EB260N, EB270N, EB280W, EB265N, EB565N, and EB360E2 (all of which are EPDM rubber, manufactured by Maxell Kureha Co., Ltd.); SW940D, SW950D, SW960D, SW970D, SR950D, SR930T, SR940T, SH950T, and SW955T (all of which are silicone rubber, manufactured by Maxell Kureha Co., Ltd.); and FB750N, FB760N, FB770N, FB780N, FB880N, and FB970N (all of which

are fluororubber, manufactured by Maxell Kureha Co., Ltd.).

From the viewpoint of reducing the occurrence and adhesion of foreign substances during the vacuum heating pressurization, the above-described cloth is preferably formed of a dust-free base material, and from the viewpoint of antistatic properties, it is preferably sewn with a conductive carbon fiber.

The cloth may be produced by a known method, or a commercially available product may be used. Examples of the commercially available cloth include HM-CLC (manufactured by Tanimura corp.).

It is preferable that the film and the sheet-like member such as the rubber and the cloth described above have the same or larger size than the laminate 10 in order to transmit a pressing force by the bag 106 uniformly to the laminate 10.

The film and the sheet-like member such as the rubber and the cloth described above may have the same or larger size than the windshield glass 28.

The conditions of the vacuum heating pressurization, such as the degree of vacuum and the heating temperature, may be appropriately set depending on the heat seal layer 26, the heat resistance of the forming material of the laminate 10, the thickness of the laminate 10, and the like.

After the vacuum heating pressurization is completed, the laminate 10 and the windshield glass 28 are taken out of the bag, and as shown in the third row of FIG. 2, the bonded body of the laminate 10 and the windshield glass 28 is further heated and pressed by the autoclave in the same manner as described above.

After the heating press by the autoclave is completed, the bonded body is taken out of the autoclave and cooled as shown in the lower row of FIG. 2.

Here, as described above, the laminate 10 according to the embodiment of the present invention has an average thermal contraction rate at 140°C of 0.3% or more. Therefore, as shown in the lower row of FIG. 3, fine wrinkles are eliminated by the thermal contraction of the laminate 10 due to the heating in the autoclave.

That is, the laminate 10 according to the embodiment of the present invention can be bonded to the windshield glass having a curved surface with good followability and can sufficiently suppress wrinkles after bonding, even without using the mold 104 as shown in FIG. 6.

The conditions of the heating pressurization by the autoclave, such as the applied pressure and the heating temperature, may be appropriately set depending on the heat seal layer 26, the heat resistance of the forming material of the laminate 10, the thickness of the laminate 10, and the like.

The image display system according to the embodiment of the present invention includes the laminate according to the embodiment of the present invention, and an image display apparatus which displays an image onto the laminate.

FIG. 4 conceptually shows an example in which the image display system according to the embodiment of the present invention is used for a head-up display system. In the following description, the head-up display system will also be referred to as HUD.

A HUD 30 shown in FIG. 4 includes a laminate 10A according to the embodiment of the present invention and a projector 32.

As conceptually shown in FIG. 5, the laminate 10A is bonded to the windshield glass 28 with the heat seal layer 26 on the windshield glass 28 side.

The laminate 10A is obtained by bonding the laminate 10 shown in FIG. 1 to the windshield glass 28 and then peeling off the protective film 12.

The projector 32 shown in FIG. 4 includes an image forming unit 34, an intermediate image screen 36, a mirror 38, and a concave mirror 40.

In the HUD 30 shown in FIG. 4, as indicated by an one-dot chain line, a projection light projected by the projector 32 is transmitted through a transmission window 46 provided on a dashboard 42 of a vehicle equipped with the HUD 30, is incident on the laminate 10A bonded to the windshield glass 28, is reflected by the reflective layer 20, and is observed by a driver D (one-dot chain line).

As in the known HUD, in the HUD 30 of the example shown in the drawing, the driver D observes a virtual image of the image projected on the windshield glass 28.

The image forming unit 34 includes a liquid crystal display (LCD) 50 and a projection lens 52.

The LCD 50 and the projection lens 52 are known components used in a projector for the HUD. The image forming unit 34 projects the image displayed on the LCD 50 onto the intermediate image screen 36 through the projection lens 52.

In the projector 32, the intermediate image screen 36 forms a real image of the projection image, and the mirror 38 and the concave mirror 40 reflect the real image to a predetermined optical path. As described above, the reflected light is transmitted through the transmission window 46 provided on the dashboard 42, is incident on the laminate 10A, is reflected, and is observed by the driver D as the projection image.

As a preferred aspect, the LCD 50 displays an image (projection image) of p-polarized light. That is, as a preferred aspect, in the HUD 30 according to the present invention, the projector 32 emits the projection light of p-polarized light.

Therefore, in a case where the LCD 50 does not display the projection light of p-polarized light, for example, it is preferable to provide a polarizer which converts the projection light from the LCD 50 into p-polarized light in the middle of the optical path of the projection light from the LCD 50 to the concave mirror 40. As the polarizer, a known polarizer can be

used.

Alternatively, a polarizer which converts the projection light from the LCD 50 into p-polarized light may be provided outside the projector 32, that is, in the middle of the optical path of the projection light from the concave mirror 40 to the windshield glass 28.

As an example, in the laminate 10A of the example shown in the drawing, a cholesteric liquid crystal layer is used as the reflective layer 20.

In addition, as an example, in the laminate 10A of the example shown in the drawing, the retardation layer 18 is a quarter-wave plate. The quarter-wave plate converts the incident p-polarized light into circularly polarized light in a rotation direction, which is selectively reflected by the reflective layer 20, that is, the cholesteric liquid crystal layer.

Therefore, in the laminate 10A, the p-polarized light is converted into circularly polarized light by the retardation layer 18, the circularly polarized light is reflected by the reflective layer 20, and the circularly polarized light is converted back into p-polarized light by the retardation layer 18. As a result, the laminate 10A selectively reflects the p-polarized light.

As is well known, polarized sunglasses selectively block S-polarized light. Therefore, since the projector 32 emits the projection light of p-polarized light, the projection image of p-polarized light can be projected, and the image projected by the HUD 30 can be observed even in a case where the driver D wears the polarized sunglasses.

In the projector constituting the HUD according to the present invention, the image forming unit 34 is not limited to using the LCD 50, and various known image forming means used in the projector of the HUD can be used.

As an example, various known image forming means used in the projector (imager) of the HUD, such as a fluorescent display tube, liquid crystal on silicon (LCOS) using a liquid crystal, an organic electroluminescence (organic EL) display, and digital light processing (DLP) using a digital micromirror device (DMD), can be used. In these image forming means, as in the LCD 50, the projection image is projected onto the intermediate image screen 36 by the projection lens.

In addition, as the image forming means of the image forming unit 34, an image forming means using light beam scanning can also be used.

The projection light emitted from the image forming unit 34 is then real-imaged (visualized) by the intermediate image screen 36.

The intermediate image screen 36 is not limited, and various known intermediate image screens which real-image the projection image in the projector of the HUD can be used. Specific examples of the intermediate image screen 36 include a scattering film, a microlens array, and a screen for rear projection.

The projection light which has been real-imaged by the intermediate image screen 36 is reflected on a predetermined optical path by the mirror 38 and the concave mirror 40 as described above, transmitted through the transmission window 46 provided on the dashboard 42, projected onto the laminate 10A bonded to the windshield glass 28, and observed by the driver D (see the one-dot chain line).

The mirror 38 is a known mirror used for adjusting the optical path of the projection light in the projector. In addition, the mirror 38 may be a so-called cold mirror which reflects visible light and transmits infrared light to prevent heating of the constituent member of the projector 32 due to sunlight incident from the windshield glass.

On the other hand, the concave mirror 40 is a known concave mirror used for the projector of the HUD to magnify and project the projection light.

In the projector 32 of the example shown in the drawing, the mirror 38 and the concave mirror 40 are used as members which change the optical path of the projection light, but the present invention is not limited thereto.

For example, the projector 32 may include only one of the mirror 38 or the concave mirror 40, or may include one or more other optical reflection elements such as a freeform-surface mirror, in addition to or instead of the mirror 38 and/or the concave mirror 40.

That is, a configuration in which various optical reflection elements are used can be used for the projector constituting the HUD according to the present invention.

As described above, the projector 32 emits the projection light of p-polarized light.

The projection light of p-polarized light, which is projected by the projector 32 and has transmitted through the transmission window 46, is incident on the retardation layer 18 by transmitting through the hard coat layer 14 and the resin base material 16. As described above, the retardation layer 18 is the quarter-wave plate, and converts the incident projection light of p-polarized light into circularly polarized light in a rotation direction which is selectively reflected by the reflective layer 20 (cholesteric liquid crystal layer).

The projection light of the circularly polarized light converted by the retardation layer 18 is reflected by the reflective layer 20, is incident on the retardation layer 18 again, and is converted into the original p-polarized light by the retardation layer 18.

The projection light converted into the p-polarized light by the polarization conversion layer 24 is emitted to the observation position of the driver D. Here, since the projection image is the p-polarized light, as described above, the driver D can appropriately observe the projection image even in a case where the driver D wears the polarized sunglasses.

In addition, as described above, the laminate according to the embodiment of the present invention can be

bonded to the adherend having a curved surface, such as the windshield glass 28, without causing wrinkles or the like. Therefore, the HUD 30 which reflects the projection light from the projector 32 by the laminate 10A which is the laminate according to the embodiment of the present invention can project a high-quality image without image disturbance caused by the wrinkles or the like of the laminate 10A, regardless of whether or not the polarized sunglass is worn.

On the other hand, in a case where s-polarized light causing glare, such as reflected light from puddle and reflected light from a hood, is incident from the outside of the vehicle, the s-polarized light transmits through the windshield glass 28 and is incident on the laminate 10A, and transmits through the heat seal layer 26 and is incident on the polarization conversion layer 24.

For example, the s-polarized light incident on the polarization conversion layer 24 is converted into elliptically polarized light in a rotation direction corresponding to the s-polarized light by the helical structure of the liquid crystal compound contained in the polarization conversion layer 24.

The elliptically polarized light transmitted through the polarization conversion layer 24 is incident on the reflective layer 20.

As described above, the reflective layer 20 is a cholesteric liquid crystal layer which selectively reflects the circularly polarized light converted from the p-polarized light by the retardation layer 18. Therefore, the elliptically polarized light in the rotation direction corresponding to the s-polarized light transmits through the reflective layer 20. In addition, the elliptically polarized light in the rotation direction corresponding to the s-polarized light is converted into circularly polarized light in the rotation direction corresponding to the s-polarized light by transmitting through the reflective layer 20 (cholesteric liquid crystal layer).

The circularly polarized light transmitted through the reflective layer 20 is incident on the retardation layer 18.

As described above, the retardation layer 18 is a quarter-wave plate that converts the p-polarized light into the circularly polarized light which is selectively reflected by the cholesteric liquid crystal layer constituting the reflective layer 20. Therefore, the circularly polarized light in the rotation direction corresponding to the s-polarized light incident on the retardation layer 18 transmits through the retardation layer 18 and is converted into s-polarized light.

The s-polarized light causing glare, incident from the outside of the vehicle, transmits through the laminate 10A as the s-polarized light in this way. Therefore, the s-polarized light is shielded by the polarized sunglass even in a case of reaching the driver D. That is, since the laminate according to the embodiment of the present invention includes the polarization conversion layer, in a case where the laminate is used for the HUD, the change in polarization of the external light by the retardation layer and the reflective layer is compensated, and the s-polarized light causing glare, incident from the outside of the vehicle, can transmit through the laminate as the s-polarized light, so that the shielding by the polarized sunglass is possible.

The image display system according to the embodiment of the present invention is not limited to the HUD as the example shown in the drawing.

That is, the image display system according to the embodiment of the present invention can be used in various known image display systems as long as the image display system includes the laminate according to the embodiment of the present invention and an image display apparatus which projects an image onto the laminate according to the embodiment of the present invention.

Although the laminate, the bonded body, the image display system, and the method for manufacturing a bonded body according to the embodiments of the present invention have been described in detail above, the present invention is not limited to the above-described embodiments, and various modifications or changes may be made without departing from the spirit of the present invention.

## Examples

Hereinafter, characteristics of the present invention will be described in detail with Examples. The materials, reagents, amounts and proportions of substances, operations, and the like described in Examples can be appropriately modified as long as the gist of the present invention is maintained. Therefore, the scope of the present invention is not limited to Examples below.

<Preparation of curable composition for forming hard coat layer (HC layer)>

Components were mixed according to the formulation shown in Table 1 below, and filtered through a polypropylene filter having a pore diameter of 10 μm, thereby preparing a curable composition HC-1 for forming an HC layer.

The blending amount of each component shown in Table 1 is represented in part by mass.

[Table 1]

| Composition for forming HC layer | | HC-1 |
|---|---|---|
| Radically polymerizable compound | DPHA (manufactured by Nippon Kayaku Co., Ltd.) | 42.8 |
| Cationically polymerizable compound | CYCLOMER M100 (manufactured by Daicel Corporation) | 5.10 |
| Radical polymerization initiator | Irgacure 184 (manufactured by BASF) | 2.04 |
| Cation polymerization initiator | PAC-1 | 0.41 |
| UV absorber | TINUVIN 928 (manufactured by BASF) | 0.59 |
| Antifouling agent | RS-90 (manufactured by DIC CORPORATION) | 0.31 |
| Solvent | Methyl ethyl ketone (MEK) | 15.4 |
| | Methyl isobutyl ketone (MIBK) | 18.6 |
| | Methyl acetate | 14.7 |
| [0207] PAG-1 is the following compound. | | |

Cationic photopolymerization initiator (iodonium salt compound) PAG-1

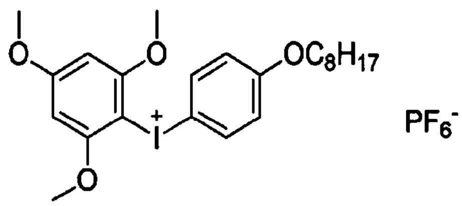

<Preparation of composition for forming heat seal layer>

Components were mixed according to the formulation shown in the tables below, and filtered through a polypropylene filter having a pore diameter of 10 μm, thereby preparing compositions HS-1 to HS-11 for forming a heat seal layer.

The blending amount of each component shown in Table 2 is represented in part by mass.

[Table 2]

| Curable composition for forming heat seal layer | | HS-1 | HS-2 | HS-3 | HS-4 | HS-5 | HS-6 | HS-7 | HS-8 | HS-9 | HS-10 | HS-11 |
|---|---|---|---|---|---|---|---|---|---|---|---|---|
| Thermoplastic resin | KURARITY LA4285 (manufactured by Kuraray Co., Ltd.) | 9.55 | 4.78 | 4.40 | 3.90 | 11.69 | 10.19 | 8.69 | 10.19 | 9.44 | 7.19 | 5.69 |
| Plasticizer | SAIB100 (sucrose acetate isobutyrate, manufactured by Eastman Chemical Company) | | | | | 1.50 | 3.00 | 4.50 | | | | |
| | Compound A | | | | | | | | 3.00 | 3.00 | | |
| | SUPER ESTER A75 (manufactured by BASF) | | | | | | | | | | 6.00 | 7.50 |
| Polymerizable compound | NK ESTER A-1000 (Shin-Nakamura Chemical Co., Ltd.) | | | | | | | | | 0.75 | | |
| Polymerization initiator | Irgacure 127 (manufactured by BASF) | 0.100 | 0.100 | 0.100 | 0.100 | 0.300 | 0.300 | 0.300 | 0.300 | 0.300 | 0.300 | 0.300 |
| Silica particles | AEROSIL RX300 (manufactured by Nippon Aerosil Co., Ltd.) | 0.125 | 0.125 | 0.500 | 1.000 | 1.500 | 1.500 | 1.500 | 1.500 | 1.500 | 1.500 | 1.500 |
| Leveling agent | F-784-F (manufactured by DIC CORPORATION, 30% MEK diluted solution) | | | | | 0.050 | 0.050 | 0.050 | 0.050 | 0.050 | 0.050 | 0.050 |
| Solvent | Methyl ethyl ketone (MEK) | 47.50 | 47.50 | 47.50 | 47.50 | 42.47 | 42.47 | 42.47 | 42.47 | 42.47 | 42.47 | 42.47 |
| | Butyl acetate | 47.50 | 47.50 | 47.50 | 47.50 | 42.50 | 42.50 | 42.50 | 42.50 | 42.50 | 42.50 | 42.50 |

<Preparation of composition for forming reflective layer, composition for forming retardation layer, and composition for forming polarization conversion layer>

Each component was mixed in the formulation shown in Table 3 below, and the mixture was filtered through a polypropylene filter having a pore diameter of 10 μm to prepare compositions BG1, R1, and IR1 for forming a reflective layer, a composition A1 for forming a retardation layer, and a composition TW-1 for forming a polarization conversion layer.

The blending amount of each component shown in Table 3 is represented in part by mass.

The mixture 1, the alignment control agent 1, and the alignment control agent 2 are the following compounds.

· Mixture 1

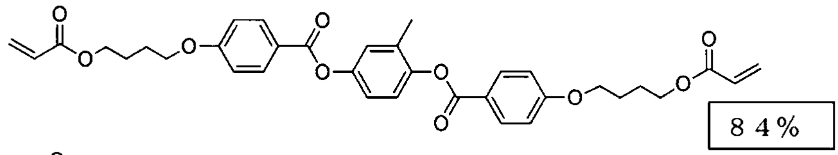

8 4 %

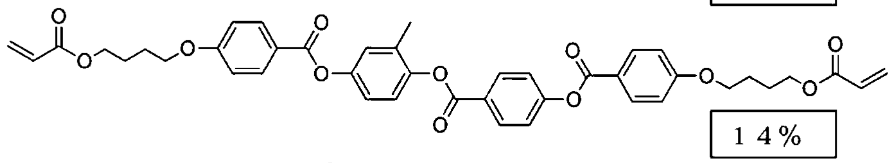

1 4 %

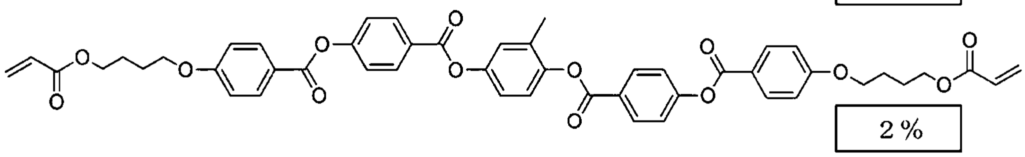

2 %

numerical value is % by mass

Alignment control agent 1

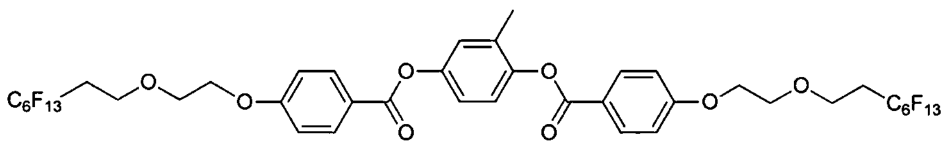

Alignment control agent 2

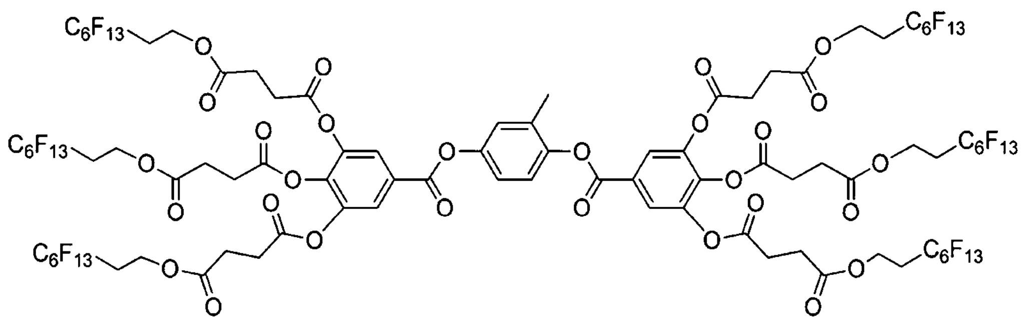

[Table 3]

| Composition for forming reflective layer, composition for forming retardation layer, composition for forming polarization conversion layer | | BG1 | R1 | IR1 | A1 | TW1 |
|---|---|---|---|---|---|---|
| Polymerizable liquid crystal compound | Mixture 1 | 100.00 | 100.00 | 100.00 | 100.00 | 100.00 |
| Chiral agent | LC756 (manufactured by BASF) | 6.37 | 4.08 | 3.36 | | 0.32 |
| Polymerization initiator | Irgacure OXE01 (manufactured by BASF) | 1.00 | 1.00 | 1.00 | 1.00 | 1.00 |
| Alignment control agent | Alignment control agent 1 | 0.05 | 0.05 | 0.05 | 0.05 | 0.05 |
| | Alignment control agent 2 | 0.02 | 0.02 | 0.02 | 0.01 | 0.02 |
| Solvent | Methyl ethyl ketone (MEK) | 134.30 | 131.44 | 130.54 | 126.33 | 126.74 |

<Saponification of cellulose acylate film>

A cellulose acylate film having a thickness of 100 μm was produced by the same production method as in Example 20 described in WO2014/112575A. UV-531 manufactured by Fujian Disheng Technology Co., Ltd. was added to the cellulose acylate film as an ultraviolet absorber. The addition amount thereof was 3 per hundred resin (phr).

After passing the produced cellulose acylate film through a dielectric heating roll at a temperature of 60°C to raise the surface temperature of the film to 40°C, one side of the film was coated with an alkaline solution with formulation provided as below at a coating amount of 14 mL/$m^2$ using a bar coater, and was allowed to stay under a steam-type far infrared heater (manufactured by Noritake Co., Ltd.) heated to 110°C for 10 seconds.

Next, pure water was applied thereto at 3 mL/$m^2$ using a bar coater in the same manner.

Next, washing with water using a fountain coater and dewatering using an air knife were repeated three times, staying in a drying zone at 70°C was performed for 5 seconds, and drying was performed to produce a cellulose acylate film 1 subjected to the saponification treatment.

In addition, cellulose acylate films 2 and 3 were produced according to the same production procedure as that of the cellulose acylate film 1, except that the film thicknesses were adjusted to 140 μm and 180 μm.

In addition, a cellulose acylate film 4 was produced according to the same production procedure as that of the cellulose acylate film 1, except that the film thickness was adjusted to 180 μm and the stretching conditions were adjusted such that the residual stress was increased.

In addition, a cellulose acylate film 5 was produced according to the same production procedure as that of the cellulose acylate film 1, except that the film thickness was adjusted to 180 μm and the stretching conditions were adjusted such that the residual stress was further increased.

In addition, a cellulose acylate film 6 was produced according to the same production procedure as that of the cellulose acylate film 5, except that the film thickness was adjusted to 40 μm.

In addition, a cellulose acylate film 7 was produced according to the same production procedure as that of the cellulose acylate film 1, except that the film thickness was adjusted to 80 μm.

In addition, a cellulose acylate film 8 was produced according to the same production procedure as that of the cellulose acylate film 1, except that the stretching conditions were adjusted such that the residual stress was decreased.

| Formulation of alkali solution | |
|---|---|
| · Potassium hydroxide | 4.7 parts by mass |
| · Water | 15.7 parts by mass |
| · Isopropanol | 64.8 parts by mass |
| · Surfactant ($C_{16}H_{33}O(CH_2CH_2O)_{10}H$) | 1.0 part by mass |
| · Propylene glycol | 14.9 parts by mass |

<Formation of hard coat layer>

The curable composition HC-1 for forming an HC layer was applied onto a surface of the cellulose acylate film 1 produced as described above on a side opposite to the saponification-treated surface, and cured to form an HC1 layer

having a film thickness of 6 μm.

The method of applying and curing was specifically as follows. By a die coating method using a slot die, described in Example 1 of JP2006-122889A, the curable composition HC-1 for forming an HC layer was applied under a condition of a transportation speed of 30 m/min, and dried at an atmospheric temperature of 60°C for 60 seconds, thereby obtaining a coating film. Thereafter, under nitrogen purging, the coating film was cured by irradiating with ultraviolet rays having an illuminance of 150 $mW/cm^2$ and an irradiation amount of 600 $mJ/cm^2$ using an air-cooled metal halide lamp (manufactured by EYE GRAPHICS Co., Ltd.) of 160 W/cm with an oxygen concentration of approximately 0.1% by volume to form an HC layer, thereby obtaining a film HC1 having the resin base material and the HC layer.

<Formation of heat seal layer>

The composition HS-1 for forming a heat seal layer was applied onto the surface of the above-described film HC1 on an opposite side of the hard coat layer using a wire bar such that a film thickness after drying was 0.8 μm, and dried at 120°C for 1 minute to form a coating film.

Thereafter, under nitrogen purging, the coating film was cured by irradiating with ultraviolet rays having an illuminance of 150 $mW/cm^2$ and an irradiation amount of 300 $mJ/cm^2$ using an air-cooled metal halide lamp (manufactured by EYE GRAPHICS Co., Ltd.) of 160 W/cm with an oxygen concentration of approximately 0.1% by volume, thereby producing a laminate of Example 1, having a configuration of HC layer/resin base material/heat seal layer.

<Examples 2 to 5 and Comparative Examples 1 to 3>

Laminates of Examples 2 to 5 and Comparative Examples 1 and 2 were produced in the same manner as in Example 1, except that the cellulose acylate films 2 to 5 and 7 and 8 were used as the resin base material. In addition, a laminate of Comparative Example 3 was produced in the same manner as in Comparative Example 2, except that the hard coat layer was not formed.

<Example 6>

<Formation of alignment film>

The saponified surface of the saponified cellulose acylate film 5 (resin base material) obtained as described above was coated with a coating liquid for forming an alignment film, having formulation described below, using a wire bar coater at 24 $mL/m^2$, and dried with hot air at 100°C for 120 seconds to obtain an alignment film having a thickness of 0.5 μm.

| Formulation of coating liquid for forming alignment film | |
|---|---|
| · Modified polyvinyl alcohol shown below | 28 parts by mass |
| · Citric acid ester (AS3, manufactured by Sankyo Chemical Co., Ltd.) | 1.2 parts by mass |
| · Photoinitiator (IRGACURE 2959, manufactured by BASF) | 0.84 parts by mass |
| · Glutaraldehyde | 2.8 parts by mass |
| · Water | 699 parts by mass |
| · Methanol | 226 parts by mass |

(Modified polyvinyl alcohol)

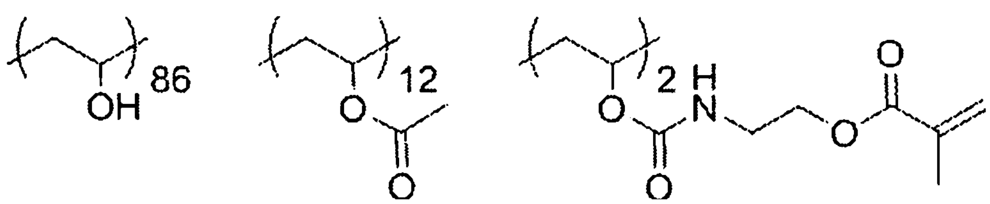

<Production of reflection film>

The alignment film produced as described above was subjected to a rubbing treatment (rayon cloth, pressure: 0.1 kgf (0.98 N), rotation speed: 1,000 revolutions per minute (rpm), transportation speed: 10 m/min, number of times: 1 round trip) in a direction rotated clockwise by 45° with respect to a long side direction of the resin base material.

The composition IR1 for forming a reflective layer was applied onto the rubbed surface of the alignment film described above at room temperature using a wire bar, such that a thickness of a dry film after drying was 0.4 μm, to obtain a coating film.

The coating film was dried at room temperature for 30 seconds, and heated in an atmosphere of 85°C for 2 minutes. Thereafter, in an environment with an oxygen concentration of 1,000 ppm or less, a D bulb (90 mW/cm lamp) manufactured by Fusion Co., Ltd. was used for irradiation on the coating film with ultraviolet rays at 60°C and an output of 60% for 6 to 12 seconds to immobilize a cholesteric liquid crystalline phase, thereby obtaining a cholesteric liquid crystal layer IR1 having a thickness of 0.4 μm.

Next, the same process was repeated on the surface of the obtained cholesteric liquid crystal layer IR1 using the composition BG1 for forming a reflective layer, thereby laminating a cholesteric liquid crystal layer BG1 having a thickness of 0.84 μm thereon.

Next, the same process was repeated on the surface of the obtained cholesteric liquid crystal layer BG1 using the composition R1 for forming a reflective layer, thereby laminating a cholesteric liquid crystal layer R1 having a thickness of 0.36 μm thereon.

In this way, a film A1 having a reflective layer consisting of three cholesteric liquid crystal layers was obtained. In a case where a transmission spectrum of the film A1 was measured with a spectrophotometer (manufactured by JASCO Corporation, V-670), transmission spectra having selective reflection center wavelengths at 515 nm, 685 nm, and 775 nm were obtained.

The composition HS-1 for forming a heat seal layer was applied onto a surface of the cellulose acylate film 1 of the film A1 produced as described above on the reflective layer side using a wire bar such that a film thickness after drying was 0.8 μm, and the coating film was formed by performing a drying treatment at 120°C for 1 minute.

Thereafter, under nitrogen purging, the coating film was cured by irradiating with ultraviolet rays having an illuminance of 150 mW/cm$^2$ and an irradiation amount of 300 mJ/cm$^2$ using an air-cooled metal halide lamp (manufactured by EYE GRAPHICS Co., Ltd.) of 160 W/cm with an oxygen concentration of approximately 0.1% by volume, thereby producing a film HS1 having a configuration of resin base material/reflective layer/heat seal layer.

<Formation of hard coat layer>

The curable composition HC-1 for forming an HC layer was applied onto a surface of the film HS1 produced as described above on an opposite side to the HS layer, and cured to form an HC1 layer having a film thickness of 6 μm.

The method of applying and curing was specifically as follows. By a die coating method using a slot die, described in Example 1 of JP2006-122889A, the curable composition for forming an HC layer was applied under a condition of a transportation speed of 30 m/min, and dried at an atmospheric temperature of 60°C for 60 seconds, thereby obtaining a coating film. Thereafter, under nitrogen purging, the coating film was cured by irradiating with ultraviolet rays having an illuminance of 150 mW/cm$^2$ and an irradiation amount of 600 mJ/cm$^2$ using an air-cooled metal halide lamp (manufactured by EYE GRAPHICS Co., Ltd.) of 160 W/cm with an oxygen concentration of approximately 0.1% by volume to form an HC layer, thereby obtaining a laminate of Example 6, having a configuration of HC layer/resin base material/reflective layer/heat seal layer.

<Example 7>

A laminate of Example 7, having a configuration of HC layer/resin base material/retardation layer/reflective layer/heat seal layer, was produced in the same manner as in Example 6, except that the composition A1 for forming a retardation layer was applied onto the rubbed surface of the alignment film using a wire bar, dried, and cured under the following conditions, and the composition IR1 for forming a reflective layer was applied onto the cured retardation layer A1.

<Curing conditions of composition A1 for forming retardation layer>

The composition A1 for forming a retardation layer was applied and dried to obtain a coating film, the coating film was placed on a hot plate at 50°C, and irradiated with ultraviolet rays for 6 seconds using an electrodeless lamp "D bulb" (60 mW/cm$^2$) manufactured by Fusion Co., Ltd. in an environment with an oxygen concentration of 1,000 ppm or less to form a retardation layer. As a result, a retardation layer having a desired front phase difference, that is, a thickness adjusted to obtain a desired retardation was obtained.

In a case where the retardation of the produced retardation layer at 550 nm was measured with AxoScan manufactured by Axometrics, Inc., it was 126 nm.

<Example 8>

A laminate of Example 8, having a configuration of HC layer/resin base material/retardation layer/reflective layer/polarization conversion layer/heat seal layer, was produced in the same manner as in Example 7, except that a polarization conversion layer TW1 was applied onto the cholesteric liquid crystal layer R1 such that the thickness was 1.5 μm.

For the polarization conversion layer TW1, a composition TW1 for forming a polarization conversion layer was applied onto the cholesteric liquid crystal layer R1 at room temperature using a wire bar, and the coating film was dried at room temperature for 30 seconds and heated in an atmosphere of 85°C for 2 minutes. Thereafter, in an environment with an oxygen concentration of 1,000 ppm or less, the coating film was irradiated with ultraviolet rays at 60°C and an output of 60% for 6 to 12 seconds using a D-valve (90 mW/cm lamp) manufactured by Fusion Co., Ltd., thereby forming the polarization conversion layer.

<Example 9>

A laminate having a configuration of HC layer/resin base material/retardation layer/reflective layer/polarization conversion layer/heat seal layer was produced in the same manner as in Example 8, except that the cellulose acylate film 6 was used as the resin base material.

(Production of protective film 1)

As a resin constituting a substrate layer, Novatec HF560 (manufactured by Japan Polyethylene Corporation) was prepared. ULTRASEN (registered trademark) 750 (manufactured by Tosoh Corporation) was prepared as an ethylene-vinyl acetate copolymer constituting an adhesive layer. In addition, Novatec (registered trademark) LC522 (manufactured by Japan Polyethylene Corporation) was used as a polyethylene resin constituting the adhesive layer.

Next, a resin mixture for the adhesive layer was prepared by blending the above-described ethylene-vinyl acetate copolymer and the above-described polyethylene resin at a mass ratio of 50:50. Next, the resin constituting the substrate layer and the resin mixture for the adhesive layer were charged into each extruder of a T-die type composite film forming machine having two extruders, the extrusion amounts of the extruders were adjusted so that a thickness ratio of the substrate layer was 96% and a thickness ratio of the adhesive layer was 4% (220°C), thereby producing a protective film 1 as a two-layer laminated film having a film thickness of 200 μm.

The protective film 1 was bonded to the HC layer side of the above-described laminate such that the adhesive layer of the protective film 1 and the HC layer of the laminate were in contact with each other, thereby producing a laminate of Example 9, having a configuration of protective film 1/HC layer/resin base material/retardation layer/reflective layer/polarization conversion layer/heat seal layer.

<Example 10>

(Production of protective film 2)

A protective film 2 was produced by the same procedure as in the production procedure of the protective film 1, except that the extrusion amounts of the extruders were adjusted so that the thickness rate of the substrate layer was 97% and a thickness ratio of the adhesive layer was 3%, and the film thickness was 250 μm.

A laminate of Example 10, having a configuration of protective film 2/HC layer/resin base material/retardation layer/reflective layer/polarization conversion layer/heat seal layer, was produced in the same manner as in Example 9, except that the protective film 2 was used.

<Measurement of tensile modulus>

The tensile modulus was measured and calculated according to the following method in accordance with the method described in JIS K 7127.

A sample piece having a width direction of 10 mm and a length direction of 150 mm in each of directions rotated clockwise by 45° from one direction in an in-plane direction of the laminate of Examples and Comparative Examples with the one direction as a reference was cut out. The cut sample piece was installed in a tensile tester (manufactured by Toyo Seiki Seisaku-sho, Ltd., trade name "Strolograph-R2") such that a chuck interval in the measurement direction was 100

mm, and stretched at a stretching speed of 300 mm/min such that the chuck interval was widened under a condition of a measurement temperature of 25°C to obtain a stress-strain curve. The tensile modulus was calculated by linear regression of the curve between strains $\varepsilon 1 = 0.0005$ and $\varepsilon 2 = 0.0025$ defined at two points.

In a case where the in-plane direction of the laminate corresponding to the length direction of the above-described test piece exhibiting the maximum tensile modulus among the tensile moduli of the sample piece was defined as a first direction, and a direction orthogonal to the first direction was defined as a second direction, an average value of the tensile modulus in the first direction and the tensile modulus in the second direction was defined as the average tensile modulus of the laminate.

<Measurement of film thickness>

The film thickness was measured by observing with a scanning electron microscope (SEM) by the following method.

A cross section of the laminate of Examples and Comparative Examples was exposed by a common method using ion beam, microtome, or the like, and the exposed cross section was observed by SEM. In the cross-sectional observation, the film thickness of the laminate was determined as an arithmetic average of film thicknesses at three division points obtained by dividing the laminate in the width direction into four equal parts, excluding both ends.

<Measurement of thermal contraction rate>

The thermal contraction rate was measured as follows.

A sample piece having a width direction of 30 mm and a length direction of 120 mm in each of directions rotated clockwise by 45° from one direction in an in-plane direction of the laminate of Examples and Comparative Examples with the one direction as a reference was cut out. Next, two reference lines were drawn in advance in a width direction of the cut test piece such that an interval was 100 mm. The sample piece was allowed to stand in a heating oven at 140°C under no tension for 45 minutes, and then cooled to room temperature, and the interval between the two reference lines was measured. The interval measured after the treatment was denoted by A [mm]. A numerical value [%] calculated from the interval of 100 mm before the treatment and the interval A [mm] after the treatment by using an expression of "100 × (100 - A)/100" was defined as the thermal contraction rate of the sample piece.

In a case where the in-plane direction of the laminate corresponding to the length direction of the above-described test piece exhibiting the maximum thermal contraction rate among the thermal contraction rates of the sample piece was defined as a first direction, and a direction orthogonal to the first direction was defined as a second direction, an average value of the thermal contraction rate in the first direction and the thermal contraction rate in the second direction was defined as the average thermal contraction rate of the laminate.

<Evaluation of wrinkles>

The evaluation of wrinkles was as follows.

A laminate of Examples and Comparative Examples, having a size of 260 mm in the longitudinal direction × 330 mm in the lateral direction, was disposed at a center portion of a glass substrate with a surface of the heat seal layer side in contact with the glass substrate on a concave side of a curved surface glass having a width of 330 mm × a length of 260 mm, a curvature of R1750 mm in the longitudinal direction of 330 mm, and a curvature of R1250 mm in the lateral direction of 260 mm.

The laminate was placed in a rubber bag, and depressurized to 10 kPa (0.1 atm) with a vacuum pump. Thereafter, the temperature was raised to 115°C under depressurization, held for 60 minutes, and then returned to normal temperature and normal pressure. Thereafter, the laminate was retained at 140°C and 1.3 Mpa (13 atm) for 60 minutes in an autoclave (manufactured by KURIHARA.) to remove air bubbles, thereby producing a glass sample in which the laminate and the glass substrate were bonded by the heat seal layer. Thereafter, the protective film 1 was peeled off in Example 9, and the protective film 2 was peeled off in Example 10.

The above-described glass sample was evaluated according to the following standard. A to C are within the acceptable range.

A: no wrinkles were present.
B: wrinkles were present, but the number of wrinkles was 2 or less.
C: the number of wrinkles was more than 2 and 10 or less.
D: the number of wrinkles was more than 10.

<Evaluation of curved surface followability>

The evaluation of curved surface followability was as follows.
The glass sample produced as described above was evaluated for portions in which no wrinkles were generated, according to the following standard. A to C are within the acceptable range.

A: no floating was present between the laminate and the glass substrate.
B: floating was present between the laminate and the glass substrate, and an area thereof was 10% or less.
C: floating was present between the laminate and the glass substrate, and an area thereof was more than 10% and 30% or less.
D: floating was present between the laminate and the glass substrate, and an area thereof was more than 30%.

<Evaluation of visibility of projection image>

The glass sample produced as described above was placed indoors with an imager (manufactured by Apple Inc., iPad (registered trademark)) fixed and installed on a level floor surface after adjusting the image projection angle, placed using a seat such that a distance between the center of the glass sample (image display unit) and the center of the imager was 1.0 m. At this time, the glass sample was tilted such that an angle between the floor surface and the surface of the glass sample was 30°.
The laminate side of the glass sample was visually observed from a position 1.0 m away from the glass sample such that the gray background simulating a road and the HUD display image were superimposed on each other. In a case where a brightness LB of the gray background and a brightness LI of the white display of the imager at this time were measured with a spectral radiance meter (manufactured by TOPCON TECHNOHOUSE CORPORATION, SR-3AR), LI/LB was 3.0.
The HUD display image used was white with displayed characters, and was evaluated based on the following standard.

A: characters were clearly visible.
B: characters were distorted, but were readable.
C: characters were faint and difficult to read.
D: characters were faint and strongly distorted by wrinkles and bubbles, and were unreadable.

<Evaluation of abrasion resistance>

The laminate of Examples and Comparative Examples was placed on a glass plate (manufactured by Corning, trade name: Eagle XG, thickness: 1 mm) such that the surface on the heat seal layer side was in contact with the glass plate, at the center of the glass plate.
The laminate was retained at 115°C and 10 kPa (0.1 atm) for 1 hour, and then heated in an autoclave (manufactured by KURIHARA.) at 140°C and 1.3 Mpa (13 atm) for 60 minutes to remove air bubbles, thereby producing a glass sample in which the laminate and the glass substrate were bonded to each other by the heat seal layer. Thereafter, the protective film 1 was peeled off in Example 9, and the protective film 2 was peeled off in Example 10.
The above-described glass sample was moisture-conditioned at a temperature of 25°C and a relative humidity of 60% for 2 hours, and then a haze (HA) before an abrasion test was measured using a haze meter (manufactured by NIPPON DENSHOKU INDUSTRIES Co., LTD., NDH2000N). Using a Taber abrasion tester (manufactured by Toyo Seiki Seisaku-sho, Ltd., rotary abrasion tester), the surface of the hard coat layer was tested for 100 cycles under the conditions of a CS-10F abrasion wheel, a rotation speed of 72 rpm, and a load of 500 gf.
For the laminate after the test, a haze (HB) of the test portion was measured. Δhaze (HB - HA) before and after the test was calculated and evaluated according to the following standard.

<<ΔHaze before and after abrasion resistance test>>

A: less than 4%
B: more than 4%

In Table 4, the column of "Resin base material" indicates the type of the cellulose acylate film used, and each numerical value indicates the number of the cellulose acylate film. For example, "1" in Example 1 indicates the cellulose

acylate film 1.

In Table 4, the column of "Flexural stiffness coefficient ($\times 10^6$ GPa·m$^3$)" indicates the magnitude of the flexural stiffness coefficient. For example, "6" in Example 1 indicates "$6 \times 10^6$ [GPa·μm$^3$]".

[Table 4]

| | Configuration | | | | | | | Measurement | | | | Evaluation | | | |
|---|---|---|---|---|---|---|---|---|---|---|---|---|---|---|---|
| | Protective film | HC layer | Resin base material | Retardation layer | Reflective layer | Polarization conversion layer | HS layer | Tensile modulus (GPa) | Film thickness (μm) | Flexural stiffness coefficient (× $10^6$ GPa·μm$^3$) | Thermal contraction (%) | Wrinkles | Curved surface followability | Abrasion resistance | Visibility of projection image |
| Example 1 | - | HC1 | 1 | - | - | - | HS1 | 4.7 | 107 | 6 | 0.3 | C | C | A | C |
| Example 2 | - | HC1 | 2 | - | - | - | HS1 | 4.8 | 147 | 15 | 0.3 | B | C | A | C |
| Example 3 | - | HC1 | 3 | - | - | - | HS1 | 4.8 | 187 | 31 | 0.3 | A | C | A | C |
| Example 4 | - | HC1 | 4 | - | - | - | HS1 | 4.8 | 187 | 31 | 0.5 | A | B | A | C |
| Example 5 | - | HC1 | 5 | - | - | - | HS1 | 4.8 | 187 | 31 | 0.7 | A | A | A | C |
| Example 6 | - | HC1 | 5 | - | R1+BG1 +IR1 | - | HS1 | 4.8 | 188 | 32 | 0.7 | A | A | A | B |
| Example 7 | - | HC1 | 5 | A1 | R1+BG1 +IR1 | - | HS1 | 4.8 | 189 | 32 | 0.7 | A | A | A | B |
| Example 8 | - | HC1 | 5 | A1 | R1+BG1 +IR1 | TW1 | HS1 | 4.7 | 190 | 33 | 0.7 | A | A | A | B |
| Example 9 | Protective film 1 | HC1 | 6 | A1 | R1+BG1 +IR1 | TW1 | HS1 | 1.1 | 250 | 18 | 0.9 | B | A | A | A |
| Example 10 | Protective film 2 | HC1 | 6 | A1 | R1+BG1 +IR1 | TW1 | HS1 | 1.0 | 300 | 27 | 1.0 | A | A | A | A |
| Comparative Example 1 | - | HC1 | 7 | - | - | - | HS1 | 4.7 | 87 | 3 | 0.3 | D | C | A | D |
| Comparative Example 2 | - | HC1 | 8 | - | - | - | HS1 | 4.7 | 107 | 6 | 0.2 | C | D | A | D |
| Comparative Example 3 | - | - | 8 | - | - | - | HS1 | 4.9 | 101 | 5 | 0.2 | C | D | B | D |

As shown in the table, it was found that the laminate according to the embodiment of the present invention exhibited a desired effect.

In addition, from the comparison of Examples 1 to 3, it was found that the effect was more excellent in a case where the flexural stiffness coefficient was 15 × $10^6$ [GPa·μ$m^3$] or more, and the effect was further excellent in a case where the flexural stiffness coefficient was 25 × $10^6$ [GPa·μ$m^3$] or more.

In addition, from the comparison of Examples 1, 4, and 5, it was found that the effect was more excellent in a case where the thermal contraction rate was 0.4% or more, and the effect was further excellent in a case where the thermal contraction rate was 0.6% or more.

In addition, as shown in Examples 6 to 10, the visibility of the projection image using the laminate could be made favorable by including the reflective layer. In particular, as shown in Examples 9 and 10, the visibility of the projection image could be further improved by suppressing the transfer of the unevenness of the rubber bag in a case of hot-pressing the laminate in the rubber bag, by including the protective film. Furthermore, the laminate according to the embodiment of the present invention could also improve the abrasion resistance by including the hard coat layer.

From the above results, the effect of the present invention is clear.

<Example 101>

(Production of protective film 3)

A protective film 3 was produced by the same procedure as in the production procedure of the protective film 1, except that the extrusion amounts of the extruders were adjusted so that the thickness rate of the substrate layer was 97% and a thickness ratio of the adhesive layer was 3%, and the film thickness was 230 μm.

A laminate of Example 101, having a configuration of protective film 3/HC layer/resin base material/retardation layer/reflective layer/polarization conversion layer/heat seal layer, was produced in the same manner as in Example 9, except that the protective film 3 was used.

<Examples 102 to 106>

Laminates of Examples 102 to 106, having a configuration of protective film 3/HC layer/resin base material/retardation layer/reflective layer/polarization conversion layer/heat seal layer, was produced in the same manner as in Example 101, except that the HS-2 to 6 were used as the composition for forming the heat seal layer.

<Example 107>

A laminate of Example 107, having a configuration of protective film 3/HC layer/resin base material/retardation layer/reflective layer/polarization conversion layer/heat seal layer, was produced in the same manner as in Example 106, except that the film thickness of the heat seal layer after drying was 3.0 μm.

<Example 108>

A laminate of Example 108, having a configuration of protective film 3/HC layer/resin base material/retardation layer/reflective layer/polarization conversion layer/heat seal layer, was produced in the same manner as in Example 106, except that the film thickness of the heat seal layer after drying was 4.0 μm.

<Example 109>

A laminate of Example 109, having a configuration of protective film 3/HC layer/resin base material/retardation layer/reflective layer/polarization conversion layer/heat seal layer, was produced in the same manner as in Example 106, except that the film thickness of the heat seal layer after drying was 5.0 μm.

<Examples 1010 to 14>

Laminates of Examples 110 to 114, having a configuration of protective film 3/HC layer/resin base material/retardation layer/reflective layer/polarization conversion layer/heat seal layer, was produced in the same manner as in Example 109, except that the HS-7 to 11 were used as the composition for forming the heat seal layer.

The laminates of Examples 101 to 114 were evaluated as follows, in addition to the evaluation of the wrinkles and the curved surface followability.

<Evaluation of wrinkles after vacuum heating pressurization at 90°C>

The evaluation of wrinkles after vacuum heating pressurization at 90°C was as follows.

The laminate of Examples 101 to 114, having a size of 260 mm in the longitudinal direction × 330 mm in the lateral direction, was disposed at a center portion of a glass substrate with a surface of the heat seal layer side in contact with the glass substrate on a concave side of a curved surface glass having a width of 330 mm × a length of 260 mm, a curvature of R1750 mm in the longitudinal direction of 330 mm, and a curvature of R1250 mm in the lateral direction of 260 mm.

The laminate was placed in a rubber bag, and depressurized to 10 kPa (0.1 atm) with a vacuum pump. Thereafter, the temperature was raised to 90°C under depressurization, held for 60 minutes, and then returned to normal temperature and normal pressure.

The above-described glass sample was evaluated according to the following standard.

A: no wrinkles were present.
B: wrinkles were present, but the number of wrinkles was 2 or less.
C: the number of wrinkles was more than 2 and 10 or less.
D: the number of wrinkles was more than 10.

<Evaluation of adhesion after vacuum heating pressurization at 90°C>

The evaluation of adhesion after vacuum heating pressurization at 90°C was as follows.

The glass sample produced as described above was evaluated for portions in which no wrinkles were generated, according to the following standard.

A: no portion where the laminate was peeled off from the glass substrate was present.
B: portion where the laminate was peeled off from the glass substrate was present, and an area thereof was 5% or less.
C: portion where the laminate was peeled off from the glass substrate was present, and an area thereof was more than 5% and 10% or less.
D: portion where the laminate was peeled off from the glass substrate was present, and an area thereof was more than 10%.

<Evaluation of visibility of projection image of vacuum heat-pressed product at 90°C>

The glass sample produced as described above was retained at 140°C and 1.3 Mpa (13 atm) for 60 minutes in an autoclave (manufactured by KURIHARA.) to remove air bubbles, thereby producing a glass sample in which the laminate and the glass substrate were bonded by the heat seal layer. Thereafter, the protective films were peeled off. The glass sample was placed indoors with an imager (manufactured by Apple Inc., iPad (registered trademark)) fixed and installed on a level floor surface after adjusting the image projection angle, placed using a seat such that a distance between the center of the glass sample (image display unit) and the center of the imager was 1.0 m. At this time, the glass sample was tilted such that an angle between the floor surface and the surface of the glass sample was 30°.

The laminate side of the glass sample was visually observed from a position 1.0 m away from the glass sample such that the gray background simulating a road and the HUD display image were superimposed on each other. In a case where a brightness LB of the gray background and a brightness LI of the white display of the imager at this time were measured with a spectral radiance meter (manufactured by TOPCON TECHNOHOUSE CORPORATION, SR-3AR), LI/LB was 3.0. The HUD display image used was white with displayed characters, and was evaluated based on the following standard.

A: characters were clearly visible.

B: characters were distorted due to wrinkles or floating, and there was a part which could not be read.

C: characters were strongly distorted due to wrinkles or floating, and there was a part which could not be read.

D: characters were very strongly distorted due to wrinkles or floating, and there were many parts which could not be read.

<Evaluation of abrasion resistance of vacuum heat-pressed product at 90°C>

The laminate of Examples 101 to 113 was placed on a glass plate (manufactured by Corning, trade name: Eagle

XG, thickness: 1 mm) such that the surface on the heat seal layer side was in contact with the glass plate, at the center of the glass plate.

The laminate was retained at 90°C and 10 kPa (0.1 atm) for 1 hour, and then heated in an autoclave (manufactured by KURIHARA.) at 140°C and 1.3 MPa (13 atm) for 60 minutes to remove air bubbles, thereby producing a glass sample in which the laminate and the glass substrate were bonded to each other by the heat seal layer. Thereafter, the protective films were peeled off.

The above-described glass sample was moisture-conditioned at a temperature of 25°C and a relative humidity of 60% for 2 hours, and then a haze (HA) before an abrasion test was measured using a haze meter (manufactured by NIPPON DENSHOKU INDUSTRIES Co., LTD., NDH2000N). Using a Taber abrasion tester (manufactured by Toyo Seiki Seisaku-sho, Ltd., rotary abrasion tester), the surface of the hard coat layer was tested for 100 cycles under the conditions of a CS-10F abrasion wheel, a rotation speed of 72 rpm, and a load of 500 gf.

For the laminate after the test, a haze (HB) of the test portion was measured. ∆haze (HB - HA) before and after the test was calculated and evaluated according to the following standard.

<<∆Haze before and after abrasion resistance test>>

A: less than 4%
B: more than 4%

[Table 5]

| | Configuration | | | | | | | Measurement | | | | | | Evaluation | | | | | |
|---|---|---|---|---|---|---|---|---|---|---|---|---|---|---|---|---|---|---|---|
| | Protective film | HC layer | Resin base material | Retardation layer | Reflective layer | Polarization conversion layer | HS layer | Tensile modulus (GPa) | Film thickness (μm) | Flexural stiffness coefficient ($\times 10^6$ GPa·μ-$m^3$) | Thermal contraction (%) | Storage clastic modulus ofhcat seal layerat 25°C (MPa) | Storage elastic modulus of heat seal layer at 90°C (MPa) | Wrinkles | Curved surface followability | Wrinkles after vacuum heating pressurization at 90°C | Adhesion after vacuum heating pressurization at 90°C | Abrasion resistance of vacuum heat-pressed product at 90°C | Visibility of projection imageof vacuum heat-pressed product at 90°C |
| Example 101 | Protective film 3 | HC1 | 6 | A1 | R1+BG1+IR1 | TWI | HS1 | 1.1 | 281 | 23 | 0.9 | 350 | 80 | A | A | A | B | A | A |
| Example 102 | Protective film 3 | HC1 | 6 | A1 | R1+BG1+IR1 | TWI | HS2 | 1.1 | 281 | 23 | 0.9 | 350 | 80 | A | A | A | B | A | A |
| Example 103 | Protective film 3 | HC1 | 6 | A1 | R1+BG1+IR1 | TWI | HS3 | 1.1 | 281 | 23 | 0.9 | 464 | 120 | A | A | A | C | A | c |
| **Example** 104 | Protective film 3 | HC1 | 6 | A1 | R1+BG1+IR1 | TWI | HS4 | 1.1 | 281 | 23 | 0.9 | 570 | 160 | A | A | A | D | A | D |
| Example 105 | Protective film 3 | HC1 | 6 | A1 | R1+BG1+IR1 | TWI | HS5 | 1.0 | 281 | 24 | 0.9 | 270 | 5 | A | A | A | A | A | A |
| Example 106 | Protective film 3 | HC1 | 6 | A1 | R1+BG1+IR1 | TWI | HS6 | 1.0 | 281 | 24 | 0.9 | 270 | 5 | A | A | A | A | A | A |
| Example 107 | Protective film 3 | HC1 | 6 | A1 | R1+BG1+IR1 | TWI | HS6 | 1.0 | 283 | 24 | 0.9 | 270 | 5 | A | A | A | A | A | A |
| Example 108 | Protective film 3 | HC1 | 6 | A1 | R1+BG1+IR1 | TWI | HS6 | 1.0 | 284 | 24 | 0.9 | 270 | 5 | A | A | A | A | A | A |
| Example 109 | Protective film 3 | HC1 | 6 | A1 | R1+BG1+IR1 | TWI | HS6 | 1.0 | 285 | 24 | 0.9 | 270 | 5 | A | A | A | A | A | A |
| Example 110 | Protective film 3 | HC1 | 6 | A1 | R1+BG1+IR1 | TWI | HS7 | 1.0 | 285 | 24 | 0.9 | 220 | 3 | A | A | A | A | A | A |
| Example 111 | Protective film 3 | HC1 | 6 | A1 | R1+BG1+IR1 | TWI | HS8 | 1.0 | 285 | 24 | 0.9 | 444 | 60 | A | A | A | B | A | B |

(continued)

| | Configuration | | | | | | | Measurement | | | | | | Evaluation | | | | | |
|---|---|---|---|---|---|---|---|---|---|---|---|---|---|---|---|---|---|---|---|
| | Protective film | HC layer | Resin base material | Retardation layer | Reflective layer | Polarization conversion layer | HS layer | Tensile modulus (GPa) | Film thickness (μm) | Flexural stiffness coefficient (× $10^6$ GPa·μ-$m^3$) | Thermal contraction (%) | Storage clastic modulus ofhcat seal layerat 25°C (MPa) | Storage elastic modulus of heat seal layer at 90°C (MPa) | Wrinkles | Curved surface followability | Wrinkles after vacuum heating pressurization at 90°C | Adhesion after vacuum heating pressurization at 90°C | Abrasion resistance of vacuum heat-pressed product at 90°C | Visibility of projection imageof vacuum heat-pressed product at 90°C |
| Example 112 | Protective film 3 | HC1 | 6 | A1 | R1+BG1+IR1 | TWI | HS9 | 1.0 | 285 | 24 | 0.9 | 444 | 38 | A | A | A | A | A | A |
| Example 113 | Protective film 3 | HC1 | 6 | A1 | R1+BG1+I-R1 | TWI | HSI-O | 1.0 | 285 | 24 | 0.9 | 128 | 4 | A | A | B | A | A | B |
| Example 114 | Protective film 3 | HC1 | 6 | A1 | R1+BG1+I-R1 | TWI | H-S11 | 1.0 | 285 | 24 | 0.9 | 88 | 1 | A | A | C | A | A | C |

For the laminate of Example 109, the laminate and the rubber bag were vacuum heat-pressed with a rubber sheet or film interposed therebetween as follows, and the evaluation was performed.

<Evaluation of wrinkles of vacuum heat-pressed product interposing rubber sheet>

The laminate of Example 109, having a size of 260 mm in the longitudinal direction × 330 mm in the lateral direction, was disposed at a center portion of a glass substrate with a surface of the heat seal layer side in contact with the glass substrate on a concave side of a curved surface glass having a width of 330 mm × a length of 260 mm, a curvature of R1750 mm in the longitudinal direction of 330 mm, and a curvature of R1250 mm in the lateral direction of 260 mm.

A rubber sheet EB360E2 (thickness: 2 mm, EPDM rubber, manufactured by Maxell Kureha Co., Ltd.) having a size of 260 mm in length × 330 mm in width was laminated on the protective film 3 layer side of the laminate of Example 109 described above.

The laminate was placed in a rubber bag, and depressurized to 10 kPa (0.1 atm) with a vacuum pump. Thereafter, the rubber sheet was removed, the temperature of the laminate and the glass substrate bonded to each other by the heat seal layer was raised to 115°C under reduced pressure of the glass sample, held at 115°C for 60 minutes, and then returned to normal temperature and normal pressure. Thereafter, the laminate was retained at 140°C and 1.3 MPa (13 atm) for 60 minutes in an autoclave (manufactured by KURIHARA.) to remove air bubbles, thereby producing a glass sample in which the laminate and the glass substrate were bonded by the heat seal layer. Thereafter, the protective film 3 was peeled off.

The above-described glass sample was evaluated according to the following standard. A to C are within the acceptable range.

A: no wrinkles were present.
B: wrinkles were present, but the number of wrinkles was 2 or less.
C: the number of wrinkles was more than 2 and 10 or less.
D: the number of wrinkles was more than 10.

<Evaluation of curved surface followability of vacuum heat-pressed product interposing rubber sheet>

The glass sample produced as described above was evaluated for portions in which no wrinkles were generated, according to the following standard. A to C are within the acceptable range.

A: no floating was present between the laminate and the glass substrate.
B: floating was present between the laminate and the glass substrate, and an area thereof was 10% or less.
C: floating was present between the laminate and the glass substrate, and an area thereof was more than 10% and 30% or less.
D: floating was present between the laminate and the glass substrate, and an area thereof was more than 30%.

<Evaluation of wrinkles of vacuum heat-pressed product interposing film>

The laminate of Example 109, having a size of 260 mm in the longitudinal direction × 330 mm in the lateral direction, was disposed at a center portion of a glass substrate with a surface of the heat seal layer side in contact with the glass substrate on a concave side of a curved surface glass having a width of 330 mm × a length of 260 mm, a curvature of R1750 mm in the longitudinal direction of 330 mm, and a curvature of R1250 mm in the lateral direction of 260 mm.

A PET film (thickness: 60 μm, manufactured by FUJIFILM Corporation) having a size of 260 mm in length × 330 mm in width was laminated on the protective film 3 layer side of the laminate of Example 109 described above.

The laminate was placed in a rubber bag, and depressurized to 10 kPa (0.1 atm) with a vacuum pump. Thereafter, the PET film was removed, the temperature of the laminate and the glass substrate bonded to each other by the heat seal layer was raised to 115°C under reduced pressure of the glass sample, held at 115°C for 60 minutes, and then returned to normal temperature and normal pressure. Thereafter, the laminate was retained at 140°C and 1.3 MPa (13 atm) for 60 minutes in an autoclave (manufactured by KURIHARA.) to remove air bubbles, thereby producing a glass sample in which the laminate and the glass substrate were bonded by the heat seal layer. Thereafter, the protective film 3 was peeled off.

The above-described glass sample was evaluated according to the following standard. A to C are within the acceptable range.

A: no wrinkles were present.
B: wrinkles were present, but the number of wrinkles was 2 or less.
C: the number of wrinkles was more than 2 and 10 or less.
D: the number of wrinkles was more than 10.

<Evaluation of curved surface followability of vacuum heat-pressed product interposing film>

The glass sample produced as described above was evaluated for portions in which no wrinkles were generated, according to the following standard. A to C are within the acceptable range.

A: no floating was present between the laminate and the glass substrate.
B: floating was present between the laminate and the glass substrate, and an area thereof was 10% or less.
C: floating was present between the laminate and the glass substrate, and an area thereof was more than 10% and 30% or less.
D: floating was present between the laminate and the glass substrate, and an area thereof was more than 30%.

<Evaluation of wrinkles of vacuum heat-pressed product interposing film and rubber sheet>

The laminate of Example 109, having a size of 260 mm in the longitudinal direction × 330 mm in the lateral direction, was disposed at a center portion of a glass substrate with a surface of the heat seal layer side in contact with the glass substrate on a concave side of a curved surface glass having a width of 330 mm × a length of 260 mm, a curvature of R1750 mm in the longitudinal direction of 330 mm, and a curvature of R1250 mm in the lateral direction of 260 mm.
A PET film (thickness: 60 μm, manufactured by FUJIFILM Corporation) having a size of 260 mm in length × 330 mm in width was laminated on the protective film 3 layer side of the laminate of Example 109 described above.
A rubber sheet EB360E2 (thickness: 2 mm, EPDM rubber, manufactured by Maxell Kureha Co., Ltd.) having a size of 260 mm in length × 330 mm in width was laminated on the above-described PET film.
The laminate was placed in a rubber bag, and depressurized to 10 kPa (0.1 atm) with a vacuum pump. Thereafter, the rubber sheet and the PET film were removed, the temperature of the laminate and the glass substrate bonded to each other by the heat seal layer was raised to 115°C under reduced pressure of the glass sample, held at 115°C for 60 minutes, and then returned to normal temperature and normal pressure. Thereafter, the laminate was retained at 140°C and 1.3 MPa (13 atm) for 60 minutes in an autoclave (manufactured by KURIHARA.) to remove air bubbles, thereby producing a glass sample in which the laminate and the glass substrate were bonded by the heat seal layer. Thereafter, the protective film 3 was peeled off.
The above-described glass sample was evaluated according to the following standard. A to C are within the acceptable range.

A: no wrinkles were present.
B: wrinkles were present, but the number of wrinkles was 2 or less.
C: the number of wrinkles was more than 2 and 10 or less.
D: the number of wrinkles was more than 10.

<Evaluation of curved surface followability of vacuum heat-pressed product interposing film and rubber sheet>

The glass sample produced as described above was evaluated for portions in which no wrinkles were generated, according to the following standard. A to C are within the acceptable range.

A: no floating was present between the laminate and the glass substrate.

B: floating was present between the laminate and the glass substrate, and an area thereof was 10% or less.

C: floating was present between the laminate and the glass substrate, and an area thereof was more than 10% and 30% or less.

D: floating was present between the laminate and the glass substrate, and an area thereof was more than 30%.

[Table 6]

| | Configuration | | | | | | | Measurement | | | | | |
|---|---|---|---|---|---|---|---|---|---|---|---|---|---|
| | Protective film | HC layer | Resin base material | Retardation layer | Reflective layer | Polarization conversion layer | HS layer | Tensile modulus (GPa) | Film thickness (μm) | Flexural stiffness coefficient (× $10^6$ GPa·μ$m^3$) | Thermal contraction (%) | Storage elastic modulus of heat seal layer at 25°C (MPa) | Storage elastic modulus of heat seal layer at 90°C (MPa) |
| Example 109 | Protective film 3 | HCI | 6 | A1 | RI+BGI+IRI | TW1 | HS6 | 1.0 | 285 | 24 | 0.9 | 270 | 5 |

[Table 7]

| | Evaluation | | | | | |
|---|---|---|---|---|---|---|
| | Wrinkles of vacuum heat-pressed product interposing rubber sheet | Curved surface followability of vacuum heat-pressed product interposing rubber sheet | Wrinkles of vacuum heat-pressed product interposing film | Curved surface followability of vacuum heat-pressed product interposing film | Wrinkles of vacuum heat-pressed product interposing film and rubber sheet | Curved surface followability of vacuum heat-pressed product interposing film and rubber sheet |
| Example 109 | A | A | A | A | A | A |

The present invention can be suitably used in a head-up display system or the like.

Explanation of References

10, 100: laminate
12: protective film
14: hard coat layer
16: resin base material
18: retardation layer
20: reflective layer
24: polarization conversion layer
26: heat seal layer
28: windshield glass
30: head-up display system (HUD)
32: projector
34: image forming unit
36: intermediate image screen
38: mirror
40: concave mirror
42: dashboard
46: transmission window
50: liquid crystal display (LCD)
52: projection lens
102: adherend
104: mold
106: bag
D: driver

## Claims

**1.** A laminate comprising, in the following order:

a hard coat layer;
a resin base material; and
a heat seal layer,
wherein the heat seal layer is disposed on an outermost side of the laminate,
a flexural stiffness coefficient S represented by the following expression 1 is $5 \times 10^6$ [GPa·$\mu$m$^3$] or more, and an average thermal contraction rate at 140°C is 0.3% or more,
the expression 1 the flexural stiffness coefficient S =
an average tensile modulus of the laminate [GPa] $\times$ (a thickness of the laminate [$\mu$m])$^3$.

**2.** The laminate according to claim 1,
wherein a storage elastic modulus of the heat seal layer at 90°C is 300 MPa or less.

**3.** The laminate according to claim 1,
wherein a storage elastic modulus of the heat seal layer at 25°C is 50 MPa or more.

**4.** The laminate according to claim 1, further comprising:
a reflective layer.

**5.** The laminate according to claim 4, further comprising:
a retardation layer.

**6.** The laminate according to claim 4, further comprising:
a polarization conversion layer.

**7.** The laminate according to claim 1,
wherein the hard coat layer, the resin base material, a retardation layer, a reflective layer, a polarization conversion layer, and the heat seal layer are provided in this order.

**8.** The laminate according to claim 7,
wherein a storage elastic modulus of the heat seal layer at 90°C is 150 MPa or less and a storage elastic modulus of the heat seal layer at 25°C is 100 MPa or more.

**9.** The laminate according to claim 1, further comprising:
a protective film on a side of the hard coat layer opposite to a side of the resin base material.

**10.** The laminate according to claim 8, further comprising:
a protective film on a side of the hard coat layer opposite to a side of the resin base material.

**11.** A bonded body comprising:

a glass having a curved surface; and
the laminate according to any one of claims 1 to 10, which is bonded to the glass.

**12.** A bonded body comprising:

a windshield glass; and
the laminate according to any one of claims 1 to 10, which is bonded to the windshield glass.

**13.** An image display system comprising:

the laminate according to any one of claims 1 to 10; and
an image display apparatus which projects an image onto the laminate.

**14.** A method for manufacturing a bonded body, comprising:

a step 1 of obtaining a bonded body by accommodating, in a bag, an adherend having a curved surface shape and the laminate according to any one of claims 1 to 10 in a state in which the heat seal layer is on a side of the adherend, and then heating an inside of the bag under reduced pressure to conform the laminate along the curved surface shape, without using a mold having a surface corresponding to the curved surface shape of the adherend; and
a step 2 of heating and pressing the bonded body obtained in the step 1.

**15.** The method for manufacturing a bonded body according to claim 14,
wherein the heating under reduced pressure is performed with a sheet-like member sandwiched between the laminate and the bag.

FIG. 1

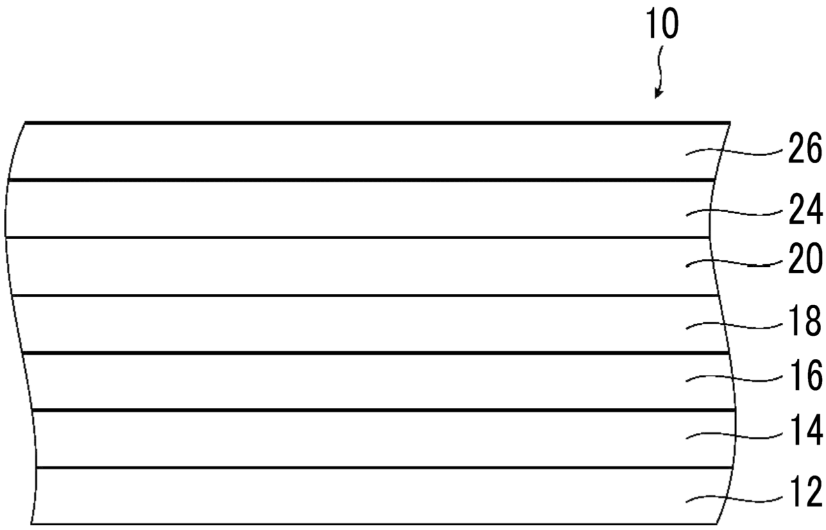

FIG. 2

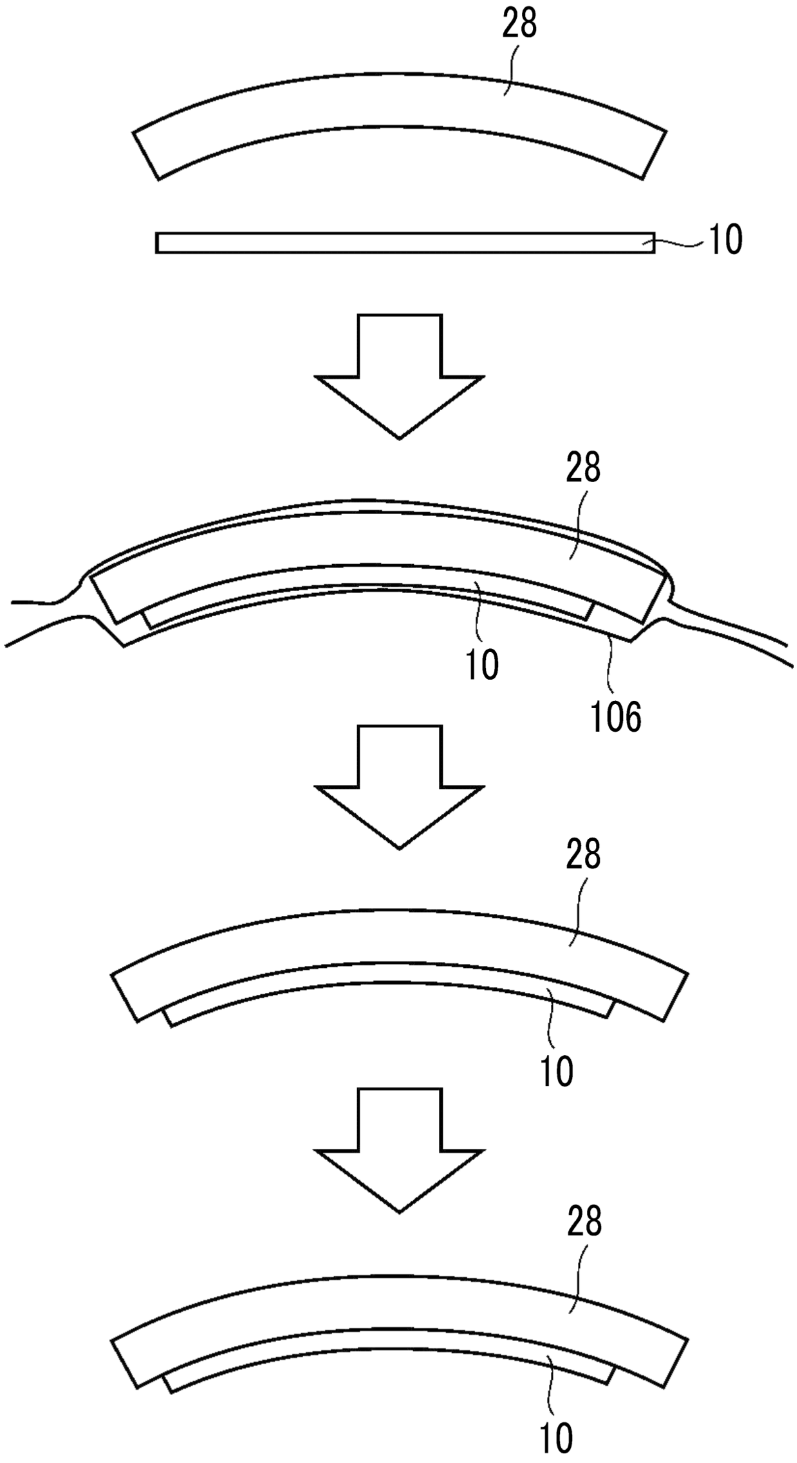

FIG. 3

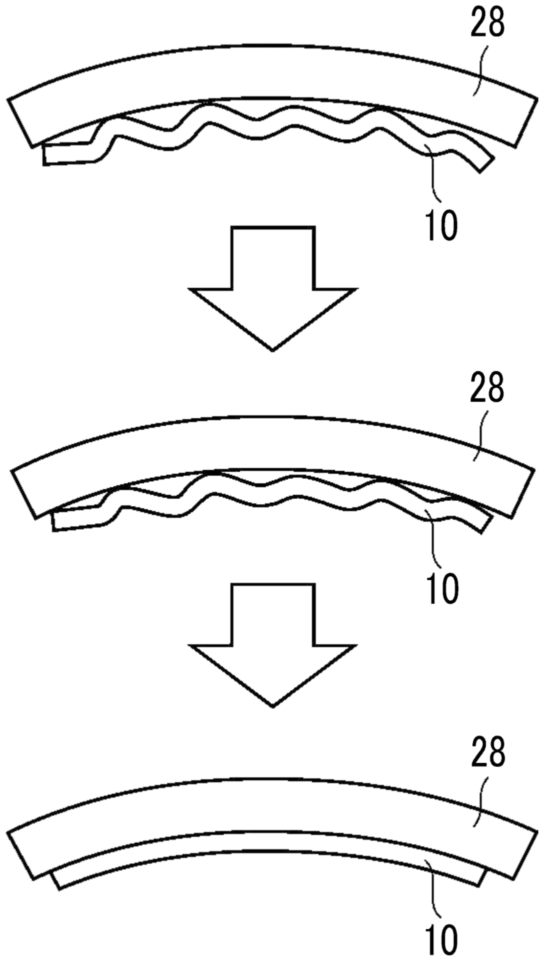

FIG. 4

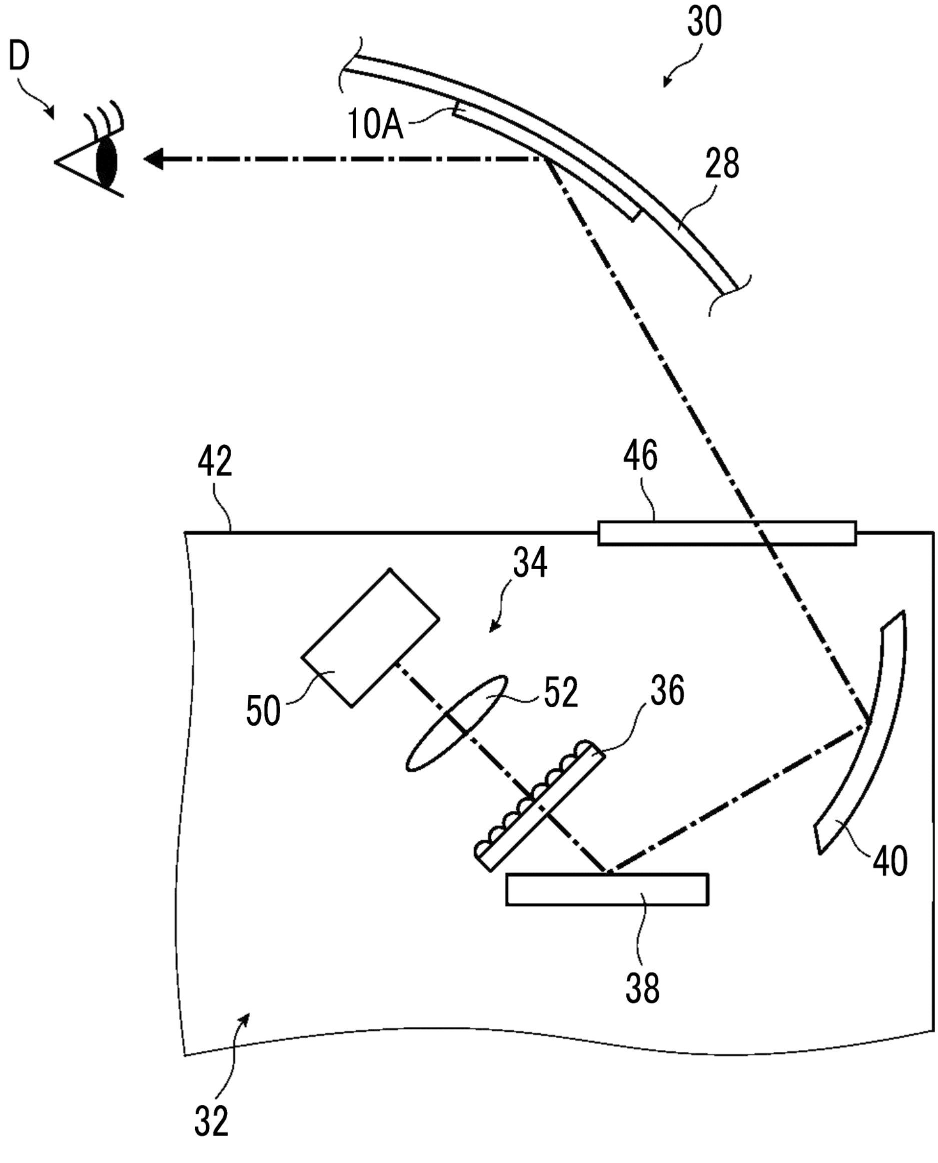

FIG. 5

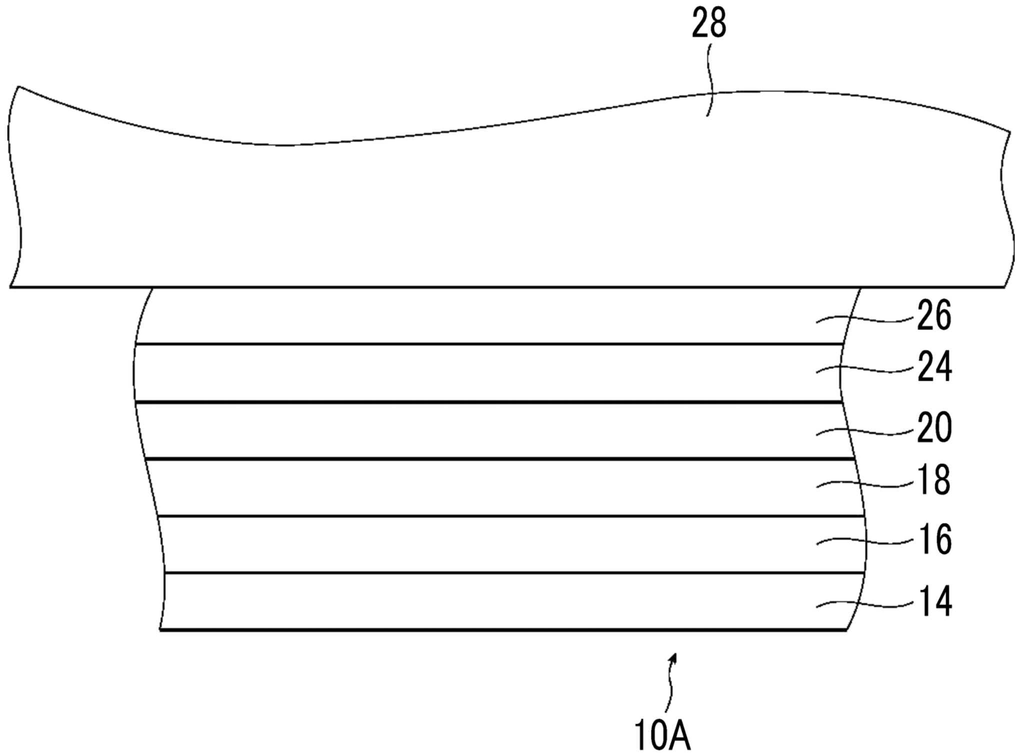

FIG. 6

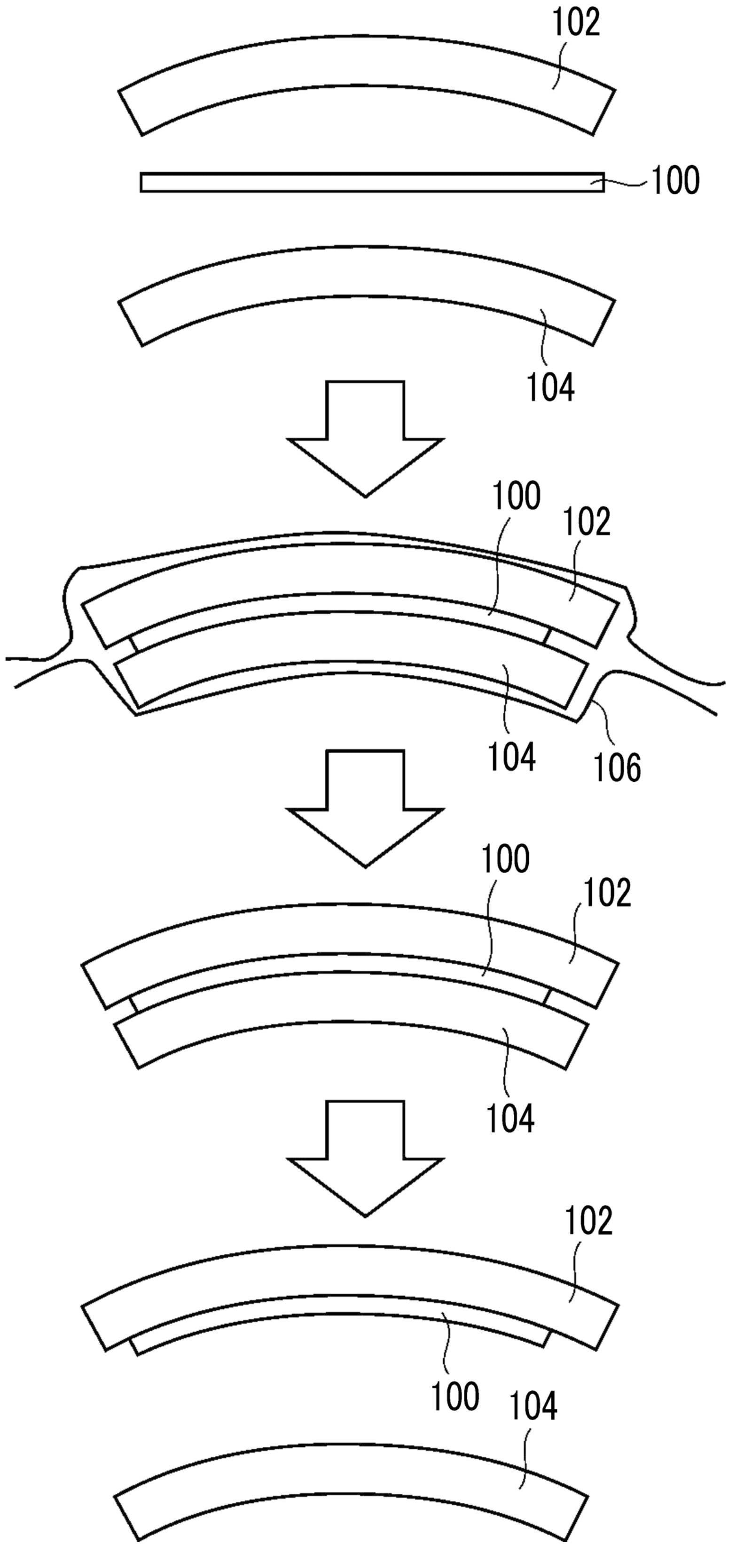

**INTERNATIONAL SEARCH REPORT**

International application No. **PCT/JP2024/019165**

**A. CLASSIFICATION OF SUBJECT MATTER**

***B32B 7/022***(2019.01)i; ***B32B 7/028***(2019.01)i; ***B32B 17/10***(2006.01)i; ***B32B 27/00***(2006.01)i; ***B60K 35/23***(2024.01)i; ***C09J 7/35***(2018.01)i; ***C09J 201/00***(2006.01)i; ***G02B 1/14***(2015.01)i; ***G02B 1/18***(2015.01)i; ***G02B 5/08***(2006.01)i; ***G02B 5/30***(2006.01)i; ***G02B 27/01***(2006.01)i; ***G06F 3/147***(2006.01)i

FI: B32B7/022; B32B7/028; B32B17/10; B32B27/00 B; B32B27/00 M; B60K35/23; C09J7/35; C09J201/00; G02B1/14; G02B1/18; G02B5/08 A; G02B5/30; G02B27/01; G06F3/147

According to International Patent Classification (IPC) or to both national classification and IPC

**B. FIELDS SEARCHED**

Minimum documentation searched (classification system followed by classification symbols)

B32B7/022; B32B7/028; B32B17/10; B32B27/00; B60K35/23; C09J7/35; C09J201/00; G02B1/14; G02B1/18; G02B5/08; G02B5/30; G02B27/01; G06F3/147

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/039394 A1 (NIPPON KAYAKU KABUSHIKI KAISHA) 04 March 2021 (2021-03-04) entire text, all drawings | 1-15 |
| A | WO 2020/179787 A1 (FUJIFILM CORPORATION) 10 September 2020 (2020-09-10) entire text, all drawings | 1-15 |
| A | JP 58-194533 A (GLAVERBEL) 12 November 1983 (1983-11-12) entire text, all drawings | 14, 15 |
| P, A | WO 2023/200018 A1 (FUJIFILM CORPORATION) 19 October 2023 (2023-10-19) entire text, all drawings | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/019165**

| Patent document cited in search report | Publication date (day/month/year) | Patent family member(s) | Publication date (day/month/year) |
|---|---|---|---|
| WO 2021/039394 A1 | 04 March 2021 | US 2022/0171094 A1<br>EP 4020025 A1<br>CN 114868048 A<br>TW 202114859 A | |
| WO 2020/179787 A1 | 10 September 2020 | US 2021/0397011 A1<br>EP 3936924 A1<br>CN 113498487 A | |
| JP 58-194533 A | 12 November 1983 | GB 2124548 A<br>DE 3315330 A<br>FR 2526011 A<br>BE 896554 A<br>ES 522229 A<br>IT 1159387 A | |
| WO 2023/200018 A1 | 19 October 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021009394 A
- JP 2009204725 A
- JP 2012229412 A
- JP 4962661 B
- US 20130100378 A
- JP 2009269301 A
- JP 2015224267 A
- JP 2007137028 A
- JP 4889335 B
- JP 11123732 A
- JP H11123732 A
- JP 2003276037 A
- WO 2007150011 A
- WO 2014112575 A
- JP 2006122889 A

### Non-patent literature cited in the description

- *Journal of the American Chemical Society*, 1939, vol. 61, 1015
- *Journal of Medicinal Chemistry*, 2011, vol. 54, 2409
- *Tetrahedron Letters*, 1999, vol. 40, 8029
- **YOSHIO KODA**. Organic Concept Map - Basic and Application. San-kyo Publishing Co., Ltd., 1984
- **HONMA et al.** *New Edition of Organic Concept Diagram: Basics and Applications*